# EUROPEAN PATENT APPLICATION

(11) **EP 4 811 143 A1**
(43) Date of publication of application: **23.09.2026**
(21) Application number: 25775611.4
(22) Date of filing: 10.03.2025
(51) Int. Cl.: G06F 12/0877

(54) **DATA ACCESS METHOD AND APPARATUS, DEVICE, AND STORAGE MEDIUM**

(30) Priority: 29.03.2024 CN 202410384863; 15.05.2024 CN 202410608815
(71) Applicant: GUANGDONG OPPO MOBILE TELECOMMUNICATIONS CORP., LTD., Dongguan, Guangdong 523860 (CN)
(72) Inventor: YOU, Shilong, Dongguan, Guangdong 523860 (CN); LI, Haitao, Dongguan, Guangdong 523860 (CN); SHAO, Ziqiao, Dongguan, Guangdong 523860 (CN); LIU, Derong, Dongguan, Guangdong 523860 (CN)
(74) Representative: Penza, Giancarlo
(86) International application number: PCT/CN2025/081604
(87) International publication number: WO 2025/201018

(57) **Abstract**

Embodiments of the disclosure provide a data access method and apparatus, a device, and a storage medium. The method includes: acquiring target pre-notification information, the target pre-notification information being used to indicate target storage information of target data to be accessed by a target data access request in a data storage apparatus, and the target storage information including at least a target storage location; and transmitting the target pre-notification information. By means of the pre-notification information, the data storage apparatus can read data in advance, thereby achieving acceleration for random access requests.

## Description

### CROSS-REFERENCE OF RELATED APPLICATIONS

This application claims priority to Chinese Patent Application No. 202410608815.1 filed on May 15, 2024 and entitled "DATA ACCESS METHOD AND APPARATUS, DEVICE, AND STORAGE MEDIUM", and Chinese Patent Application No. 202410384863.7 filed on March 29, 2024 and entitled "DATA ACCESS METHOD, APPARATUS, DEVICE, AND STORAGE MEDIUM". The entire contents of the above two applications are incorporated herein by reference.

### TECHNICAL FIELD

Embodiments of the disclosure relate to data transmission technologies, and particularly relate to, but are not limited to, a data access method and apparatus, a device, and a storage medium.

### BACKGROUND

During data access by a terminal device, an access request is often blocked due to an excessive amount of data to be accessed.

To mitigate the impact of such blocking, the accessed memory usually predicts, based on a previous access request, a next access request to be received , thereby performing data reading in advance.

However, the access request prediction performed based on the memory is only applicable to sequential access requests, and it cannot perform prediction for random access requests.

### SUMMARY

In an aspect, the embodiments of the disclosure provide a data access method implemented by a data access apparatus, and the method includes:
acquiring target pre-notification information, the target pre-notification information being used to indicate target storage information of target data to be accessed by a target data access request in a data storage apparatus, and the target storage information including at least a target storage location; and
transmitting the target pre-notification information.

In another aspect, the embodiments of the disclosure further provide a data access method implemented by a data storage apparatus, and the method includes:
receiving a target pre-notification request, the target pre-notification request including target pre-notification information, the target pre-notification information being used to indicate target storage information of target data in the data storage apparatus, the target data being data to be accessed by a target data access request of a data access apparatus, and the target storage information including at least a target storage location;
reading the target data from a storage medium of the data storage apparatus according to the target pre-notification information, and storing the target data in a cache of the data storage apparatus, an access speed of the cache being higher than an access speed of the storage medium; and
acquiring the target data from the cache and transmitting the target data to the data access apparatus, after receiving the target data access request.

In a further aspect, the embodiments of the disclosure further provide a data access apparatus including an acquisition module and a transmission module.

The acquisition module is configured to acquire target pre-notification information, the target pre-notification information being used to indicate target storage information of target data to be accessed by a target data access request in a data storage apparatus, and the target storage information including at least a target storage location.

The transmission module is configured to transmit the target pre-notification information.

In yet a further aspect, the embodiments of the disclosure further provide a data storage apparatus including a reception module, a reading module, and a return module.

The reception module is configured to receive a target pre-notification request, the target pre-notification request including target pre-notification information, the target pre-notification information being used to indicate target storage information of target data in the data storage apparatus, the target data being data to be accessed by a target data access request of a data access apparatus, and the target storage information including at least a target storage location.

The reading module is configured to read the target data from a storage medium of the data storage apparatus according to the target pre-notification information, and store the target data in a cache of the data storage apparatus, an access speed of the cache being higher than an access speed of the storage medium.

The return module is configured to acquire the target data from the cache and transmit the target data to the data access apparatus, after the target data access request is received.

The embodiments of the disclosure provide a terminal device including a memory and a processor. The memory stores a computer program executable on the processor, and the processor is configured to implement the method(s) of the embodiments of the disclosure when executing the program.

The embodiments of the disclosure provide a computer-readable storage medium having a computer program stored thereon. The computer program, when being executed by a processor, causes the method(s) provided by the embodiments of the disclosure to be implemented.

### BRIEF DESCRIPTION OF THE DRAWINGS

In order to more clearly illustrate the technical solutions in the embodiments of the disclosure, the drawings required for the embodiments are briefly introduced below. Apparently, the drawings in the following description are only some embodiments of the disclosure, and those ordinary skilled can also obtain other drawings according to these drawings without creative efforts.
FIG. 1 is a software architecture diagram of a data access apparatus provided in the embodiments of the disclosure.
FIG. 2 is a hardware structure diagram of the data access apparatus provided in the embodiments of the disclosure.
FIG. 3 is a hardware structure diagram of a data storage apparatus provided in the embodiments of the disclosure.
FIG. 4 is a schematic flowchart of a data access method implemented by a data access apparatus as provided in the embodiments of the disclosure.
FIG. 5 is a schematic flowchart of acquiring target pre-notification information implemented by the data access apparatus as provided in the embodiments of the disclosure.
FIG. 6 is a schematic overall flowchart of transmitting target pre-notification information from the data access apparatus to a data storage apparatus as provided in the embodiments of the disclosure.
FIG. 7 is one schematic flowchart of acquiring a target pre-notification request as provided in the embodiments of the disclosure.
FIG. 8 is one schematic flowchart of transmitting the target pre-notification request as provided in the embodiments of the disclosure.
FIG. 9 is another schematic flowchart of acquiring the target pre-notification request as provided in the embodiments of the disclosure.
FIG. 10 is another schematic flowchart of transmitting the target pre-notification request as provided in the embodiments of the disclosure.
FIG. 11 is a schematic flowchart of a data access method implemented by a data storage apparatus as provided in the embodiments of the disclosure.
FIG. 12 is a schematic overall flowchart of returning data in the data storage apparatus as provided in the embodiments of the disclosure.
FIG. 13 is a schematic diagram illustrating interaction between the data access apparatus and the data storage apparatus as provided in the embodiments of the disclosure.
FIG. 14 is another schematic diagram illustrating interaction between the data access apparatus and the data storage apparatus as provided in the embodiments of the disclosure.
FIG. 15 is a schematic structural diagram of the data access apparatus as provided in the embodiments of the disclosure.
FIG. 16 is a schematic structural diagram of the data storage apparatus as provided in the embodiments of the disclosure.
FIG. 17 is a schematic structural diagram of a terminal device as provided in the embodiments of the disclosure.

### DETAILED DESCRIPTION OF PREFERRED EMBODIMENTS

To make the objectives, technical solutions, and advantages of the embodiments of the disclosure clearer, specific technical solutions of the disclosure are described in detail below with reference to the drawings in the embodiments of the disclosure. The following embodiments are used to illustrate the disclosure, but are not intended to limit the scope of the disclosure.

Unless otherwise defined, all technical and scientific terms used herein have the same meaning as commonly understood by those skilled in the technical field of the disclosure. The terms used herein are for the purpose of describing the embodiments of the disclosure only, and are not intended to limit the disclosure.

In the following description, the phrase "some embodiments" describes a subset of all possible embodiments, but it is understood that "some embodiments" may be the same subset or different subsets of all possible embodiments, and may be combined with each other without conflict.

It is notable that the terms "first/second/third" involved in the embodiments of the disclosure are used to distinguish similar or different objects, and do not represent a specific ordering of objects. It is understood that "first/second/third" may be interchanged in a specific order or sequence where permitted, so that the embodiments of the disclosure described herein can be implemented in an order other than those illustrated or described herein.

In an embodiment of the disclosure, a data access method implemented by a data access apparatus is provided, and the method includes: acquiring target pre-notification information, the target pre-notification information being used to indicate target storage information of target data to be accessed by a target data access request in a data storage apparatus, and the target storage information including at least a target storage location; and transmitting the target pre-notification information.

In an embodiment, the acquiring the target pre-notification information includes: acquiring the target pre-notification information in a case where a preset condition is satisfied. The preset condition includes at least one of the following conditions: the number of data access requests included in a scheduling queue is greater than or equal to a waiting threshold; and the number of random data access requests transmitted by the data access apparatus is greater than or equal to an access threshold, and an offset between a storage location of data accessed by each of the random data access requests in the data storage apparatus and a storage location of data accessed by a previous transmitted data access request in the data storage apparatus is greater than or equal to an offset threshold.

In an embodiment, the transmitting the target pre-notification information includes: transmitting the target pre-notification information in a case where the number of data access requests that have been transmitted is greater than or equal to a transmission threshold.

In an embodiment, the target pre-notification information further includes target identification information, and the target identification information is used to indicate the target data access request.

In an embodiment, the data access apparatus includes a pre-notification queue, and after acquiring the target pre-notification information, the method further includes: generating a target pre-notification request according to the target pre-notification information, and storing the target pre-notification request in the pre-notification queue, the target pre-notification request including the target pre-notification information. The transmitting the target pre-notification information includes: acquiring the target pre-notification request from the pre-notification queue, and transmitting the target pre-notification request.

In an embodiment, the data storage apparatus is a Universal Flash Storage (UFS), and the generating the target pre-notification request according to the target pre-notification information includes: generating a target UFS Protocol Information Unit (UPIU) carrying an Extra Header Segments (EHS) area according to the target pre-notification information, the EHS area being used to indicate the target pre-notification information, and the target UPIU being the target pre-notification request.

In an embodiment, the EHS area includes an EHS data header and an EHS data area. The EHS data header includes a pre-notification quantity field and a pre-notification content field. The pre-notification quantity field is used to indicate the quantity of the target pre-notification information, the pre-notification content field is used to indicate an information type of the target storage information, and the information type includes at least a storage location type. The EHS data area includes the target storage information.

In an embodiment, the EHS data area includes a first identification field, and the first identification field is used to indicate the target identification information.

In an embodiment, there are at least two pre-notification queues, each pre-notification queue is used to store pre-notification requests, the EHS data header further includes a pre-notification type field, and the pre-notification type field is used to indicate which one of the at least two pre-notification queues the target pre-notification request is to be stored in. The storing the target pre-notification request in the pre-notification queue includes: storing the target pre-notification request in a pre-notification queue indicated by the pre-notification type field.

In an embodiment, the EHS data header further includes a length field, the UPIU includes a total EHS length field, and a value of the total EHS length field included in the UPIU is the same as a value of the length field in the EHS data header.

In an embodiment, before transmitting the target pre-notification information, the method further includes: generating a UTP transfer request descriptor (UTRD) according to the target pre-notification information, the UTRD including a total EHS length field, and a value of the total EHS length field included in the UTRD being the same as a value of the length field in the EHS data header.

In an embodiment, the data storage apparatus is a Universal Flash Storage (UFS), and the generating the target pre-notification request according to the target pre-notification information includes: generating a target Small Computer System Interface (SCSI) Command (CMD) according to the target pre-notification information, the target SCSI CMD including a data output area, and the data output area being used to indicate the target pre-notification information.

In an embodiment, the data output area includes a second identification field, and the second identification field is used for the target identification information.

In an embodiment, a transmission priority of the SCSI CMD is higher than a transmission priority of the data access request.

In an embodiment, the method further includes: updating the target data access request to obtain an updated target data access request, the updated target data access request including the target identification information; and transmitting the updated target data access request.

In another aspect, the embodiments of the disclosure further provide a data access method implemented by a data storage apparatus, the method including: receiving a target pre-notification request, where the target pre-notification request includes target pre-notification information, the target pre-notification information is used to indicate target storage information of target data in the data storage apparatus, the target data being data to be accessed by a target data access request of a data access apparatus, and the target storage information includes at least a target storage location; reading the target data from a storage medium of the data storage apparatus according to the target pre-notification information, and storing the target data in a cache of the data storage apparatus, an access speed of the cache is higher than that of the storage medium; and acquiring the target data from the cache and transmitting the target data to the data access apparatus, after receiving the target data access request.

In an embodiment, the target pre-notification request includes a target UFS Protocol Information Unit (UPIU) carrying an Extra Header Segments (EHS) area, and the EHS area is used to indicate the target pre-notification information; alternatively, the target pre-notification request includes a target Small Computer System Interface (SCSI) Command (CMD), the target SCSI CMD includes a data output area, and the data output area is used to indicate the target pre-notification information.

In an embodiment, the target pre-notification information further includes target identification information, and the target identification information is used to indicate the target data access request.

In an embodiment, the target data access request includes the target identification information, the data storage apparatus includes a first pre-read table, and the first pre-read table includes the target identification information and the target storage location. The acquiring the target data from the cache after receiving the target data access request includes: after receiving the target data access request, determining the target storage location according to the target identification information of the target data access request and the first pre-read table; and acquiring the target data from the cache, based on the target storage location and a mapping relationship between the target storage location and a storage location in the cache.

In an embodiment, the data storage apparatus includes a second pre-read table, and the second pre-read table includes the target storage location and a storage location of the target data in the cache. The acquiring the target data from the cache after receiving the target data access request includes: determining whether the target data access request hits the second pre-read table, after receiving the target data access request; and acquiring the target data from the cache, in a case where it is determined that the target data access request hits the second pre-read table.

In an embodiment, after determining whether the target data access request hits the second pre-read table, the method further includes: reading the target data from the storage medium and transmitting the target data to the data access apparatus, in a case where it is determined that the target data access request does not hit the second pre-read table.

During data access by a terminal device, an access request is often blocked due to an excessive amount of data to be accessed.

To mitigate the impact of such blocking, the accessed memory usually predicts, based on the previous access request, a next access request to be received, thereby performing data reading in advance.

However, the access request prediction performed based on the memory is only applicable to sequential access requests. For a random stream of access requests, since there is no correlation between successive access requests in the random stream, a next access request to be received cannot be predicted based on the previous access request.

In view of this, the embodiments of the disclosure provide a data access method implementable by a data access apparatus and a data access method implementable by a data storage apparatus.

The data access apparatus may be for example a host, and the host may refer to any type of terminal device capable of accessing data stored in a memory, such as a mobile phone, a wearable device (e.g., a smart watch, a smart bracelet, and a smart glasses), a tablet computer, a notebook computer, a vehicle-mounted terminal, and a Personal Computer (PC).

The data storage apparatus may be for example a Universal flash storage (UFS), which may be a memory provided in the above data access apparatus, or a memory external to the data access apparatus, which is not specifically limited herein.

If the data storage apparatus is external to the data access apparatus, the access may be implemented through a network; and if the data storage apparatus is an internal memory of the data access apparatus, the access to the data storage apparatus may be implemented based on subunits such as a memory driver in the data access apparatus.

The embodiments of the disclosure are explained by taking a case where the data storage apparatus is an internal memory of the data access apparatus as an example. The software architecture of the data storage apparatus is explained below.

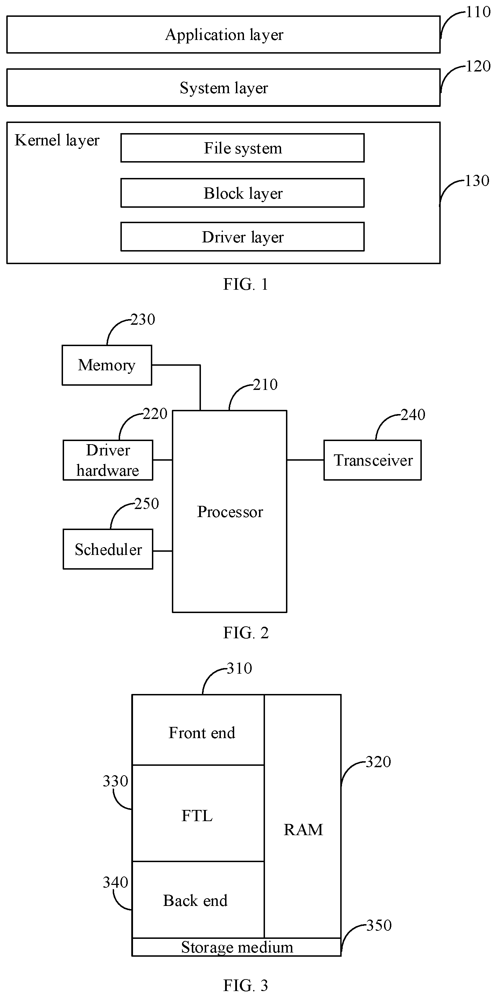

FIG. 1 is a software architecture diagram of the data access apparatus as provided in the embodiments of the disclosure. Referring to FIG. 1, the data access apparatus may include an application layer 110, a system layer 120, and a kernel layer 130. The kernel layer 130 may further include a file system, a block layer, and a driver layer.

It is notable that the application layer 110 may include specific applications in the terminal device that implement data access, such as a camera application, and a chat application; and the system layer 120 may include an operating system used by the terminal device, such as an Android system, and a Windows system.

In some implementations, the transmission of a data access request may be implemented sequentially through the application layer 110, the system layer 120, and the kernel layer 130. In the kernel layer 130, after the file system and the block layer perform corresponding processing, the driver transmits the data access request to the data storage apparatus.

The software architecture of the data access apparatus is explained above, and the hardware structure of the data access apparatus provided in the embodiments of the disclosure is explained below based on the above software architecture.

FIG. 2 is a hardware structure diagram of the data access apparatus as provided in the embodiments of the disclosure. Referring to FIG. 2, the hardware structure of the data access apparatus may include a processor 210, a driver hardware 220, a memory 230, a transceiver 240, a scheduler 250, and other hardware structures.

The processor 210 may be a processing chip of the data access apparatus, such as a Central Processing Unit (CPU) or a Microcontroller Unit (MCU), or any other type of processing chip, which is not specifically limited herein, as long as the overall control logic can be implemented. The driver hardware 220 may be a driver unit for the memory 230, which can drive the memory 230, that is, it can implement the driving function in the above software architecture. The memory 230 may be any type of storage unit, and if the data storage apparatus is an internal memory of the data access apparatus, the memory 230 may serve as the above data storage apparatus.

The transceiver 240 may transmit or receive messages to other devices. If the data storage apparatus is an external apparatus of the data access apparatus, transmission of requests may be implemented through the transceiver 240.

The scheduler 250 may schedule multiple requests, for example, it may adjust the transmission order of the requests and transmits the multiple requests in a corresponding order.

Based on the above software architecture and hardware structure, the data access apparatus may transmit access requests to the data storage apparatus.

To more clearly explain the overall process of transmission of the access request in the disclosure, the specific structure of the data storage apparatus is described below.

FIG. 3 is a hardware structure diagram of the data storage apparatus as provided in the embodiments of the disclosure. Referring to FIG. 3, the data storage apparatus may include a front end 310, a Random Access Memory (RAM) 320, a Flash Translation Layer (FTL) 330, a back end 340, and a storage medium 350.

The front end 310 may receive an access request transmitted by the data access apparatus. The RAM 320 may read based on the access request, and parse the read result to obtain a corresponding physical address. The FTL 330 may query the physical address based on the read result. The back end 340 may read data from a corresponding location in the storage medium 350 according to the corresponding physical address, to obtain a read result and return it to the data access apparatus.

The specific implementation process of the data access methods provided in the embodiments of the disclosure is further explained below based on the above explanation of the software and hardware structures of the data access apparatus and the data storage apparatus.

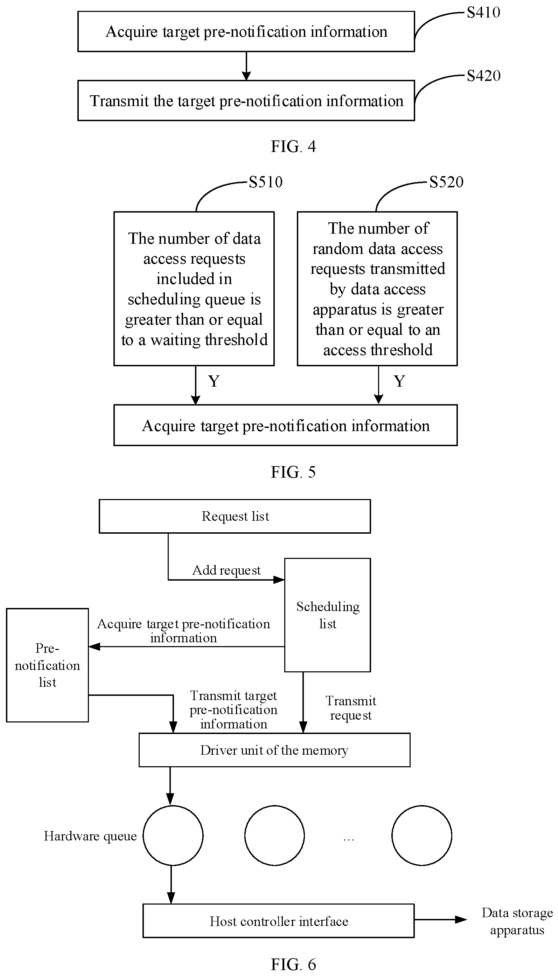

FIG. 4 is a schematic flowchart of a data access method implemented by/applied to the data access apparatus as provided in the embodiments of the disclosure. Referring to FIG. 4, the method includes operations as follows.

At S410, target pre-notification information is acquired.

In some implementations, the execution subject of the method is the above data access apparatus.

The pre-notification information (also referred to as foreshow or prefetch hint information or advance notification information) may be information used to indicate a storage location of target data to be accessed by a target data access request in the data storage apparatus.

As an example, the target data access request may be a data access request after a first data access request among multiple data access requests included in a scheduling queue, so as to implement pre-notification of subsequent data access requests. As another example, the target data access request may also be the first data access request. Since the target data access request should be transmitted to the data storage apparatus later than the target pre-notification information, a later data access request among the multiple data access requests may also be taken as the target data access request, for example, the last data access request may be taken as the target data access request. The location of the target data access request is not limited in the embodiments of the disclosure.

It is notable that the scheduling queue may be a queue in the scheduler of the data access apparatus, or a software or hardware queue for transmitting requests to a device path. The scheduling queue may be a queue for scheduling multiple data access requests, and the scheduling queue may include the multiple data access requests, where the multiple data access requests are sequentially transmitted, in the order thereof in the queue, to the driver hardware of the data access apparatus.

The target data access request may be determined from the multiple data access requests, and the target data access request may be one data access request or multiple data access requests, which is not specifically limited herein. For example, the target data access request may be the last data access request in the scheduling queue.

Each data access request may be a request for accessing corresponding target data, and the target data is stored in the data storage apparatus. Each target data may be stored at a corresponding storage location, and the pre-notification information may include information about the storage location of the target data to be accessed by the target data access request in the data storage apparatus.

In an embodiment, there may be a request list in the data access apparatus, and the request list may include multiple access requests. When the data access apparatus needs to acquire data from the data storage apparatus, a corresponding access request from the request list may be added into the scheduling queue, and the access request is transmitted through the scheduling queue. If there is a large number of access requests to be transmitted, congestion of the scheduling queue may occur. In this case, a target pre-notification request may be acquired from the scheduling queue, and the target pre-notification request may include the above target pre-notification information, that is, the target pre-notification information used to indicate the storage location of the target data to be accessed by the target data access request in the data storage apparatus may be obtained through the target pre-notification request.

At S420, the target pre-notification information is transmitted.

In some implementations, after the pre-notification information is acquired in the above way, the pre-notification information may be transmitted to the data storage apparatus. If the data storage apparatus is an internal memory of the data access apparatus, the pre-notification information may be transmitted to the data storage apparatus through the above driver hardware.

After receiving the target data access request, the data storage apparatus may perform data reading, so as to return corresponding target data to the data access apparatus.

It is notable that, since the target data access request is a request in the scheduling queue, the data storage apparatus may perform data reading for the target data access request in advance by means of the target pre-notification information, thereby mitigating the transmission pressure of the scheduling queue in the data access apparatus. Moreover, since the pre-notification information is determined based on the target data access request, the pre-notification information has high accuracy, which can also reduce invalid pre-notification of the data storage apparatus.

In the data access method provided by the embodiments of the disclosure, target pre-notification information is acquired and transmitted, where the target pre-notification information is used to indicate target storage information of target data to be accessed by a target data access request in a data storage apparatus, the target storage information includes at least a target storage location, and the target data access request is located after the first data access request of at least two data access requests included in the scheduling queue. By means of the target pre-notification information, the data storage apparatus may perform data reading in advance based on the target pre-notification information, thereby achieving acceleration for access requests in a random stream scenario, and mitigating the transmission pressure of the scheduling queue in the data access apparatus. Moreover, since the target pre-notification information is transmitted from the data access apparatus, it has high accuracy and reduces invalid pre-notification of the data storage apparatus.

The specific implementation process of acquiring the target pre-notification information by the data access apparatus as provided in the embodiments of the disclosure is explained below.

FIG. 5 is a schematic flowchart of acquiring the target pre-notification information implemented by the data access apparatus as provided in the embodiments of the disclosure. Referring to FIG. 5, the acquiring the target pre-notification information includes: acquiring the target pre-notification information when/in a case where a preset condition is satisfied, where the preset condition includes at least one of conditions as follows.

S510, the number of data access requests included in the scheduling queue is greater than or equal to a waiting threshold.

It is notable that the scheduling queue is a queue provided in the above scheduler. When the data access apparatus needs to acquire one or more pieces of data from the data storage apparatus, data access requests may be transmitted from the request queue to the scheduling queue, the scheduling queue may include multiple data access requests, these access requests may be sorted in the input order or other orders, and the individual data access requests are sequentially transmitted to the driver based on the sorting result.

When the number of data access requests in the scheduling queue is too large, congestion may occur, and in this case, it may be determined that the preset condition is satisfied.

For example, if the waiting threshold is 100 data access requests, when the number of data access requests in the scheduling queue is less than 100, it may be determined that the preset condition is not satisfied, and transmission of the data access requests may be performed through the scheduling queue. When the number of data access requests in the scheduling queue is greater than or equal to 100, it may be determined that the preset condition is satisfied, and then target pre-notification information may be determined and acquired according to a corresponding target data access request, while the data access requests are transmitted through the scheduling queue.

It is notable that there may be multiple preset conditions. In the above operation, it is determined, based on the number of data access requests, whether the preset condition is satisfied. In addition to this manner, other manners may also be adopted for example.

At S520, the number of random data access requests transmitted by the data access apparatus is greater than or equal to an access threshold.

In some implementations, the data access request may be a request transmitted by the data access apparatus from the request list to the scheduling list, and the random data access request may be one type of data access request, which means that there is poor correlation between such data access request and its previous data access request. For example, an offset between a storage location of data accessed by a random data access request in the data storage apparatus and a storage location of data accessed by its previous transmitted data access request in the data storage apparatus is greater than or equal to an offset threshold.

For example, in a case where the storage location of data accessed by the previous transmitted data access request in the data storage apparatus is location A, and the storage location of data accessed by the currently transmitted data access request in the data storage apparatus is location B, if the offset between location A and location B is less than the offset threshold, it may be determined that there is a certain correlation between the two data access requests, and the data access requests may be sequential data access requests, that is, a data stream composed of such multiple data access requests is a sequential stream. If the offset between location A and location B is greater than or equal to the offset threshold, it may be determined that there is poor correlation between the two data access requests, and the data access requests may be random data access requests, that is, a data stream composed of such multiple data access requests is a random stream. In the embodiments of the disclosure, prediction may be performed for the random stream.

When the number of random data access requests transmitted by the data access apparatus is greater than or equal to the access threshold, congestion of the scheduling queue may be caused, and in this case, it may be determined that the preset condition is satisfied.

It is notable that, in actual implementations, the preset condition may be determined to be satisfied when one of the conditions of S510 and S520 is satisfied, or when both the conditions are satisfied, which is not specifically limited herein.

In the data access method provided by the embodiments of the disclosure, the target pre-notification information may be acquired when a preset condition is satisfied. The preset condition may be determined to be satisfied when the number of data access requests included in the scheduling queue is greater than or equal to a waiting threshold, or the preset condition may be determined to be satisfied when the number of random data access requests transmitted by the data access apparatus is greater than or equal to an access threshold. The acquisition of the target pre-notification information is performed when the corresponding preset condition is satisfied, which can avoid useless data reading performed by the data storage apparatus.

The conditions for acquiring the target pre-notification information are explained above, and the condition for transmitting the target pre-notification information will be explained below.

In an embodiment, the transmitting the target pre-notification information includes: transmitting the target pre-notification information, in a case where the number of data access requests that have been transmitted is greater than or equal to a transmission threshold.

It is notable that, before the target pre-notification information is transmitted, the number of data access requests that have been transmitted from the scheduling list may be determined first. If the number is greater than or equal to the transmission threshold, it may be determined that a part of data access requests have been transmitted by the scheduling list, and then the target pre-notification information may be transmitted. If the number is less than the transmission threshold, it may be determined that the number of data access requests that have been transmitted by the scheduling list is small, and the target pre-notification information may be transmitted until the number of data access requests that have been transmitted is greater than or equal to the transmission threshold.

It can be understood that, if the data access apparatus transmits pre-notification information to the data storage apparatus at a high frequency, normal data access may not be guaranteed. Therefore, to reduce the impact of the pre-notification information on data access requests, the number of data access requests that have been transmitted at the current time may be monitored. If the number of data access requests that have been transmitted is less than the threshold, the pre-notification information may then not be transmitted. It is notable that the time duration during which the number of data access requests that have been transmitted is monitored by the data access apparatus monitors is limited, for example, the number of data access requests that have been transmitted within a preset time period may be monitored. Alternatively, a counter may be provided, and when the count value of the counter reaches a threshold, the count value is cleared and the counting is restarted. Of course, other implementations may also be included, which are not exemplified one by one herein.

When a large number of access requests have been transmitted by the scheduling list, the target pre-notification information may be transmitted, so that the data storage apparatus performs data reading in advance based on the target pre-notification information.

In an embodiment, the data access apparatus includes a pre-notification queue, and after the target pre-notification information is acquired, the method further includes: generating a target pre-notification request according to the target pre-notification information, and storing the target pre-notification request in the pre-notification queue, the target pre-notification request including the target pre-notification information.

Correspondingly, the transmitting the target pre-notification information includes: acquiring the target pre-notification request from the pre-notification queue, and transmitting the target pre-notification request.

In some implementations, the pre-notification queue may be a queue that generates target pre-notification requests. An input of the queue may be the target pre-notification information acquired from the scheduling queue, that is, one target data access request; then, a target pre-notification request may be generated according to the target pre-notification information, and the target pre-notification request may be stored in the pre-notification queue. The target pre-notification requests in the pre-notification queue are sequentially transmitted to the driver, in the order of the target pre-notification requests in the pre-notification queue.

It is notable that the provision of the pre-notification queue can facilitate management of multiple pieces of target pre-notification information, so as to perform the transmitting sequentially when there are multiple pieces of target pre-notification information to be transmitted.

In an embodiment, the target pre-notification information further includes target identification information, and the target identification information is used to indicate the target data access request. It can be understood that the target identification information is used to uniquely identify the target access request.

It is notable that there are many ways to generate the target identification information. For example, each target data access request may be preset with a label, such as a label from 0 to N. After the target pre-notification information is generated, the target identification information may be obtained according to the label of the target data access request corresponding to this target pre-notification information.

Alternatively, corresponding identification information may be generated according to a part of information in the access request, such as a part of fields, by means of a hash algorithm or the like.

Alternatively, after one piece of target pre-notification information is obtained, one label may be generated, and a corresponding relationship among the label, this target pre-notification information and its corresponding target data access request may be recorded. Then, in the subsequent process of transmitting the target data access request, a corresponding label may be added to the target data access request, so that the data storage apparatus can quickly and conveniently determine the relationship between each target pre-notification request and the target data access request.

In the data access method provided by the embodiments of the disclosure, by setting the target identification information, the data storage apparatus is enabled to quickly determine the relationship between each target data access request and the target pre-notification information, thereby returning target data more quickly and improving the return efficiency.

To more clearly explain the transmission process of target pre-notification information in the data access method provided in the disclosure, the specific implementation process of transmitting target pre-notification information from the data access apparatus to the data storage apparatus is specifically explained below.

FIG. 6 is a schematic overall flowchart of transmitting target pre-notification information from the data access apparatus to the data storage apparatus as provided in the embodiments of the disclosure. Referring to FIG. 6, the data access apparatus may include a request list, a scheduling list, a pre-notification list, a driver unit of the memory, a hardware queue, and a Host Controller Interface (HCI).

The request list may store multiple data access requests .When the data access apparatus needs to acquire data in the data storage apparatus, a corresponding data access request may be invoked from the request list and transmitted to the scheduling list. The scheduling list may sequentially transmit multiple data access requests therein to the driver unit of the memory in order.

In addition, target pre-notification information may be obtained according to any one or more data access requests after the first data access request in the scheduling list, and the target pre-notification information may be transmitted to the pre-notification list. The pre-notification list may obtain a target pre-notification request(s) based on the target pre-notification information, and transmit the target pre-notification request(s) to the driver unit of the memory. The driver unit of the memory may transmit the target pre-notification request(s) to the data storage apparatus through the hardware queue and the HCI in sequence.

It is notable that the driver unit of the memory may receive data access requests and also target pre-notification requests, and these requests may be transmitted to the data storage apparatus through the hardware queue and the HCI.

The specific transmission format of the target pre-notification request in the embodiments of the disclosure is explained below based on the above overall transmission path.

In an embodiment, the data storage apparatus is a Universal Flash Storage (UFS), and the generating the target pre-notification request according to the target pre-notification information includes: generating a target UFS Protocol Information Unit (UPIU) carrying an Extra Header Segments (EHS) area according to the target pre-notification information, where the EHS area is used to indicate the target pre-notification information, and the target UPIU is the target pre-notification request.

It is notable that the target UPIU refers to an instruction in UPIU format, that is, the target pre-notification request may be an instruction transmitted in UPIU format. The UPIU may include multiple areas, and the EHS area is one of the areas.

It is notable that the UPIU may be a pre-existing request in the driver unit of the memory, which is a request generated by a host upper-layer application. In the embodiments, the content of the EHS area in the UPIU is modified to add the target pre-notification information, that is, the EHS area in the existing UPIU may be modified to obtain a target UPIU which may be used as a target pre-notification request.

The EHS area may indicate the above target pre-notification information. In an embodiment, the EHS area includes an EHS data header and an EHS data area.

Table 1 shows a conventional field format of the EHS format, as illustrated below.

**Table 1**

| | | | |
|---|---|---|---|
| 0 bLength | 1 bEHSType | 2 wEHSSubType | 3 |
| 4 | EHS data | (32×bLength)-1 | |

The area from 0 to 3 is the EHS data header, and the area from 4 to (32×bLength)-1 is the EHS data area.

It is notable that the bLength field is a specified field of the UFS4.0 protocol, and bLength*32 is equal to the total byte size of the EHS area. The size of the EHS area must be aligned to an integer multiple of 32 bytes.

The bEHSType field is used for customized content, and its value may be arbitrarily set within the range (80h-FFh) specified by the UFS4.0 protocol, but cannot be repeated with the value of Advanced RPMB function (01h). The following reference usage methods are available.

Method 1: Different values are used to distinguish whether the transmitted content is "logical address + read length" or only logical address ("only logical address" may be used in 4K random read scenarios, where the read length may be omitted to increase the amount of pre-notification information).

Method 2: Different values are used to identify whether the "logical address + read length" is repeated and ordered.

Method 3: Used for concurrent behaviors that host controls device pre-reading: for example, the device maintains four pre-notification queues, and the host may specify, through different bEHSType values, placing new pre-notification content into a pre-notification queue, to achieve load balancing.

The EHS data header includes a pre-notification quantity field and a pre-notification content field. The pre-notification quantity field is used to indicate the quantity of the target pre-notification information. The pre-notification content field is used to indicate an information type of target storage information, and the information type at least includes a storage location type. The EHS data area includes the target storage information.

Table 2 shows the EHS field used in the embodiments of the disclosure, as illustrated below.

**Table 2**

| | | | |
|---|---|---|---|
| 0 bLength | 1 bEHSType | 2 foreshow len | foreshow lun 3 |
| LBA | | | |
| TRANSFER LENGTH | | | |
| ....... | | | |
| LBA | | | |
| TRANSFER LENGTH | | | |

The areas 0 to 1 represent the same content as mentioned above, which is not repeatedly explained here. The area 2 represents the pre-notification quantity field, and the area 3 represents the pre-notification content field.

The pre-notification quantity field "foreshow len" is used to indicate the quantity of target pre-notification information, for example, it may be the number of pieces of "logical address + read length" transmitted after the EHS data header.

The pre-notification content field "foreshow lun" is used to indicate an information type of storage information, for example, it may be a logical unit to which the "logical address + read length" transmitted after the EHS data header belongs.

The EHS data area includes the storage information, LBA is the logical address, and TRANSFER LENGTH is the read length.

It is notable that the UFS4.0 protocol requires identifying the length of the EHS area in the UPIU, so the host side also needs to modify the UTP Transfer Request Descriptor in the HCI and the total EHS length field in the UPIU, and the modified result needs to be consistent with the bLength of the EHS area.

It is notable that the target identification information may be a tag number, such as a tag from numbers 0 to N, and each tag is used to identify one unique target data access request. In addition, the target identification information may also record the status of the target data access request, for example, whether the target data access request has been pre-notified.

Table 3 shows another feasible EHS field used in the embodiments of the disclosure, as illustrated below.

**Table 3**

| | | | | | |
|---|---|---|---|---|---|
| bLength | bEHSType | | foreshow len | | foreshow lun |
| LBA | | | | | |
| TRANSFER LEN | | | | Tag | |
| ....... | | | | | |
| LBA | | | | | |
| TRANSFER LEN | | | | Tag | |

It is notable that Tag may be stored in the EHS data area as a first identification field. The first identification field is used to indicate the target identification information.

Tag may be used as the target identification information, for example, any number from 0 to N is used to represent a corresponding tag. Except for Tag, other contents are the same as those shown in Table 2, which are not repeated here.

In an embodiment, before the target pre-notification information is transmitted, the method further includes: generating a UTP Transfer Request Descriptor (UTRD) according to the target pre-notification information, where the UTRD includes a total EHS length field, and a value of the total EHS length field included in the UTRD is the same as a value of the length field in the EHS data header.

It is notable that, when the host transmits a target pre-notification request to the HCI, the HCI converts the target pre-notification request into a UTRD and stores it in the hardware queue. The format of the UTRD is shown in Table 4, and the UTP Transfer Request Descriptor therein needs to be modified.

**Table 4**

| | | | | | | |
|---|---|---|---|---|---|---|
| DW0 | Command Type | ... | ... | ... | Total_EHS_Length | ... |
| DW1 | DUNL | | | | | |
| ... | | | | | | |
| DW7 | ... | | | | | |

It is notable that the UTRD shown in Table 4 may record multiple pieces of relevant information, such as Command Type indicating a request type, DUNL (data unit number lower) indicating a reduction in the number of data units, Total_EHS_Length indicating an area length, and other data.

Total_EHS_Length may be modified to be the same as the value of the length field bLength in the EHS data header.

In an embodiment, the EHS data header further includes a length field, the UPIU includes a total EHS length field, and a value of the total EHS length field included in the UPIU is the same as a value of the length field in the EHS data header.

It is notable that, when the HCI transmits a target pre-notification request to the data storage apparatus, the target pre-notification request is transmitted in the form of UPIU, and the total EHS length field in the UPIU needs to be modified to inform the data storage apparatus. The UPIU may include contents shown in Table 5, as illustrated below.

**Table 5**

| Transaction Type | Flags | LUN | Task Tag |
|---|---|---|---|
| ... | ... | Response | ... |
| Total_EHS_Length | ... | ... | ... |
| ... | | | |

It is notable that the UPIU shown in Table 5 may record multiple pieces of relevant information, such as Transaction Type indicating a service type, Flags indicating an identifier, LUN indicating a logical unit number, Task Tag indicating a task tag, Response indicating a response status, Total_EHS_Length indicating an area length, and other data.

Total_EHS_Length may be modified to be the same as the value of the length field bLength in the EHS data header.

In an embodiment, there are at least two pre-notification queues, each pre-notification queue is used to store pre-notification requests, the EHS data header further includes a pre-notification type field, and the pre-notification type field is used to indicate which one of the at least two pre-notification queues the target pre-notification request is to be stored in . The storing the target pre-notification request in the pre-notification queue includes: storing the target pre-notification request in a pre-notification queue indicated by the pre-notification type field.

It is notable that there may be multiple pre-notification queues, such as two or three, which is not specifically limited herein. Each pre-notification queue may correspondingly store one or more types of target pre-notification requests, and the EHS data header further includes a pre-notification type field, such as the bEHSType field shown in Table 2 above. Based on the pre-notification type field in the EHS data header of each target pre-notification request, a pre-notification queue into which the target pre-notification request is to be placed may be determined.

For example, a first pre-notification queue supports type 1, and a second pre-notification queue supports type 2. The type of each target pre-notification request may be determined according to the pre-notification type field, and if it is type 1, the target pre-notification request may be stored in the first pre-notification queue; alternatively, if it is type 2, the target pre-notification request may be stored in the second pre-notification queue.

In addition to transmitting the target pre-notification information by means of the EHS field, the target pre-notification information may also transmitted in other ways.

For example, customized SCSI CMD + data output may be used to transmit the target pre-notification information.

In an embodiment, the data storage apparatus is a Universal Flash Storage (UFS), and the generating the target pre-notification request according to the target pre-notification information includes: generating a target Small Computer System Interface (SCSI) Command (CMD) according to the target pre-notification information, where the target SCSI CMD includes a data output area, and the data output area is used to indicate the target pre-notification information.

It is notable that there are many types of target SCSI CMD including a data output area, such as a WRITE BUFFER CMD type or WRITE10 CMD type.

The specific implementations of these two types of SCSI CMD carrying a data output area are explained separately below.

Table 6 shows a SCSI CMD of WRITE BUFFER CMD type including a data output area, as illustrated below.

**Table 6**

| | |
|---|---|
| OPERATION CODE | |
| Reserved | MODE |
| BUFFER ID | |
| BUFFER OFFSET | |
| PARAMETER LIST LENGTH | |
| CONTROL | |

It may include OPERATION CODE indicating an operation code, BUFFER ID indicating a buffer identifier, BUFFER OFFSET indicating a buffer offset, PARAMETER LIST LENGTH indicating a length of parameter list, CONTROL indicating a control instruction, and fields Reserved and MODE that can be used for custom setting.

The fields Reserved and MODE for custom setting may be used to carry data output DATA OUT, that is, a data output area for indicating target pre-notification information.

Table 7 shows a SCSI CMD of WRITE10 CMD type including a data output area, as illustrated below.

**Table 7**

| | | | | | | |
|---|---|---|---|---|---|---|
| OPERATION CODE | | | | | | |
| WRPROTECT | ... | ... | ... | | ... | ... |
| LOGICAL BLOCK ADDRESS | | | | | | |
| Reserved | | | | GROUP NUMBER | | |
| TRANSFER LENGTH | | | | | | |
| CONTROL | | | | | | |

It may include OPERATION CODE indicating an operation code, WRPROTECT indicating write protection, LOGICAL BLOCK ADDRESS indicating a logical block address, TRANSFER LENGTH indicating a transfer length, CONTROL indicating a control instruction, and fields Reserved and GROUP NUMBER that may be used for custom setting.

The fields Reserved and GROUP NUMBER for custom setting may be used to carry data output DATA OUT, that is, a data output area for indicating target pre-notification information.

Information that may be carried in the data output area is explained below, as illustrated in Table 8.

**Table 8**

| Byte | Content |
|---|---|
| 0-3 | Total number of "logical address + read length" |
| 4-15 | LUN, function type and other information |
| 16-19 | Logical address 1 |
| 20-23 | Read length 1 |
| 24-27 | Logical address 2 |
| 28-31 | Read length 2 |
| ... | |

It is notable that the data output area DATA OUT may include the total number of "logical address + read length", LUN, function type and other information, as well as each logical address and corresponding read length.

In an embodiment, the data output area includes a second identification field, and the second identification field is used for target identification information.

In an embodiment, if the transmitted content shown in Table 8 includes target identification information, the content in Table 8 may also be represented as those in Table 9, as illustrated below.

**Table 9**

| Byte | Content |
|---|---|
| 0-3 | Total number of "logical address + read length" |
| 4-15 | LUN, function type and other information |
| 16-19 | Logical address 1 |
| 20-21 | Read length 1 |
| 22-23 | Tag information 1 of target identification information |
| 24-27 | Logical address 2 |
| 28-29 | Read length 2 |
| 30-31 | Tag information 2 of target identification information |
| ... | |

That is to say, the last two bits of byte 20-23 that are originally used to record read length 1 may be changed to record tag information 1 of target identification information, and the tag information of the target identification information may be the TAG field explained above. Correspondingly, the last two bits of byte 28-31 that are originally used to record read length 2 may also be changed to record tag information 2 of target identification information.

It is notable that, in actual implementations, either Table 8 or Table 9 may be selected to set the information that may be carried in the data output area according to actual needs, which is not specifically limited herein.

It is notable that the above first identification field and second identification field may be fields with same content, and the only difference is that the first identification field is set in the EHS area, and the second identification field is set in the data output area.

In some implementations, for a data storage apparatus that does not support receiving data in EHS format, the data access apparatus may transmit the target pre-notification information by means of the customized SCSI CMD, and the SCSI CMD may be an additionally added request instead of a request generated by an upper-layer application of the data access apparatus.

That is to say, the EHS-based way is to attach an EHS field to the tail of an existing request in the driver unit of the memory for transmission, and the EHS length field of the existing request is also modified; and the customized SCSI CMD-based way generates a new request that is not transmitted from the upper layer.

Any of the above ways may be selected to implement transmission of target pre-notification information according to actual needs.

It is notable that, in a case where pre-notification information is transmitted by means of a customized SCSI CMD, multiple pre-notification queues may also be set for CMDs, and the data access apparatus may determine which one of the multiple pre-notification queues is to be selected for placement according to a preset condition. For example, the preset condition may be determined according to the upper limit of the number of CMDs that can be accommodated in the pre-notification queue. When the number of CMDs in a pre-notification queue reaches the upper limit, a newly generated CMD needs to be placed in another pre-notification queue. Alternatively, the preset condition may be determined according to attributes of a target data access request corresponding to the pre-notification information, and the attributes may include a type of data to be accessed by the target data access request, an application type corresponding to the target data access request, etc. Alternatively, an existing field in the CMD may be reused to indicate information of a pre-notification queue into which the target data access request is to be placed, or a new field may be added to the CMD to indicate information of a pre-notification queue into which the target data access request is to be placed, which is not limited in the embodiments of the disclosure.

In an embodiment, a transmission priority of the SCSI CMD is higher than a transmission priority of the data access request.

It is notable that, after determining a target pre-notification request, the data access apparatus may generate a SCSI CMD which may be in the WriteBuffer CMD or Write10 CMD format mentioned above, and the SCSI CMD may be directly initiated from the driver unit of the memory without passing through the block layer. Since this request does not pass through the scheduler of the block layer, that is, it does not pass through the scheduling queue, this request needs to be transmitted preferentially to ensure that the target pre-notification information is transmitted to the data storage apparatus timely. That is, the data storage apparatus needs to receive the SCSI CMD first. Therefore, the transmission priority of the SCSI CMD is higher than the transmission priority of the data access request.

To more clearly explain the specific processes of acquiring and transmitting a target pre-notification request as provided in the embodiments of the disclosure, the processes of acquiring and transmitting a target pre-notification request in the cases of one pre-notification queue and multiple pre-notification queues are explained below respectively.

First, an exemplary implementation process of acquiring a target pre-notification request in the case of one pre-notification queue is explained.

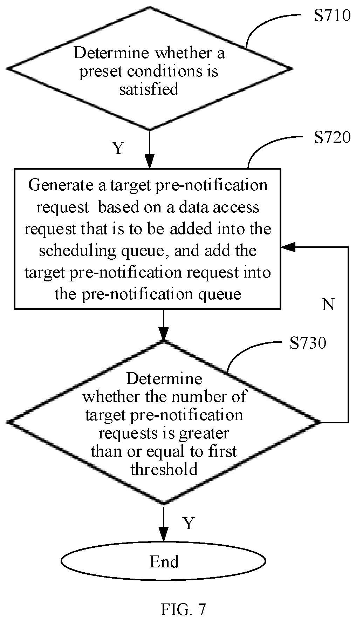

FIG. 7 is one schematic flowchart of acquiring a target pre-notification request as provided in the embodiments of the disclosure. Referring to FIG. 7, the method includes operations as follows.

At S710, it is determined whether a preset condition is satisfied.

It is notable that the preset condition may be that the number of data access requests included in the scheduling queue is greater than or equal to the waiting threshold, and/or the number of random data access requests transmitted by the data access apparatus is greater than or equal to the access threshold.

If it is determined that preset condition is satisfied, at S720, a target pre-notification request is generated based on a data access request that is to be added into the scheduling queue, and the target pre-notification request is added into the pre-notification queue.

At S730, it is determined whether the number of target pre-notification requests is greater than or equal to a first threshold; if the number is greater than or equal to the first threshold, it stops determining target pre-notification requests; and if the number is not greater than or equal to the first threshold, it continues adding target pre-notification requests into the pre-notification queue.

It is notable that, when the number of transmitted target pre-notification requests exceeds the first threshold, it indicates that a large number of pre-notification requests have been transmitted to the data storage apparatus, and the determination of target pre-notification requests may be stopped.

Next, an exemplary implementation process of transmitting a target pre-notification request in the case of one pre-notification queue is explained.

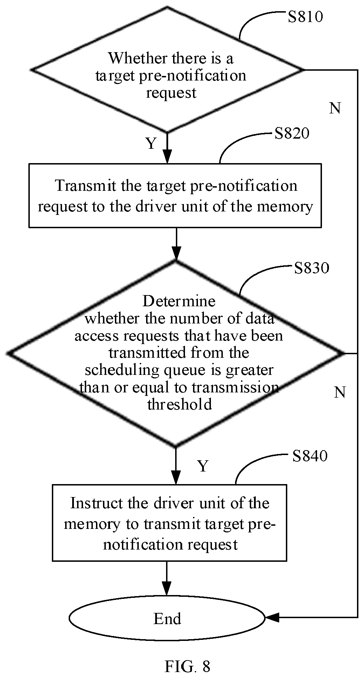

FIG. 8 is one schematic flowchart of transmitting a target pre-notification request as provided in the embodiments of the disclosure. Referring to FIG. 8, the method includes operations as follows.

At S810, it is determined whether there is a target pre-notification request.

If yes, at S820, the target pre-notification request is transmitted to the driver unit of the memory.

At S830, it is determined whether the number of data access requests that have been transmitted from the scheduling queue is greater than or equal to a transmission threshold; and if the number is not greater than or equal to the transmission threshold, it stops transmitting the target pre-notification request.

If the number is greater than or equal to the transmission threshold, at S840, the driver unit of the memory is instructed to transmit the target pre-notification request.

It is notable that operations S710-S730 and S810-S840 illustrate a transmission way of a target pre-notification request when there is one pre-notification queue, and the specific implementations thereof have been explained correspondingly above, which will not be repeated here.

In addition, it is notable that, for a data access request that has been pre-notified, the data access request may be tagged; and after the data access request is transmitted to the data storage apparatus, it may be determined, based on the tag, that pre-notification has been performed therefor, so that a data reading result can be determined more quickly.

It is notable that the contents shown in FIG. 7 and FIG. 8 illustrate the process of transmitting a target pre-notification request in the case of using a single pre-notification queue. In this case, due to the existence of the scheduling queue in the data access apparatus, the order of data access requests received by the data storage apparatus may be different from the order in the process of target pre-notification requests. In this case, the firmware processing logic of the data storage apparatus would be more complex, while the processing logic of the data access apparatus would be simpler.

Next, an exemplary implementation process of acquiring a target pre-notification request in the case of multiple pre-notification queues is explained.

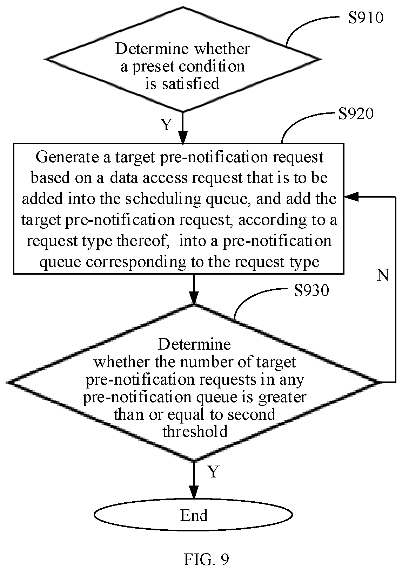

FIG. 9 is another schematic flowchart of acquiring a target pre-notification request as provided in the embodiments of the disclosure. Referring to FIG. 9, the method includes operations as follows.

At S910, it is determined whether a preset condition is satisfied.

It is notable that the preset condition is the same as the preset condition mentioned above, which will not be repeated here.

If the preset condition is satisfied, at S920, a target pre-notification request is generated based on a data access request that is to be added into the scheduling queue, and according to a request type of the target pre-notification request, the target pre-notification request is added into a pre-notification queue corresponding to the request type.

It is notable that, for multiple pre-notification queues, each pre-notification queue may be added with a target pre-notification request(s) of a corresponding type. Based the type of each target pre-notification request, the target pre-notification request may be added into a corresponding pre-notification queue.

At S930, it is determined whether the number of target pre-notification requests in any pre-notification queue is greater than or equal to a second threshold; if the number of target pre-notification requests in any pre-notification queue is greater than or equal to the second threshold, it stops determining target pre-notification requests; and if the number of target pre-notification requests in any pre-notification queue is not greater than or equal to the second threshold, it continues adding target pre-notification requests into corresponding pre-notification queues.

It is notable that, if the number of target pre-notification requests in any pre-notification queue is greater than or equal to the second threshold, the determination of target pre-notification requests may be stopped; correspondingly, if the number of target pre-notification requests in each pre-notification queue is less than the second threshold, target pre-notification requests may be continuously added into corresponding pre-notification queues.

Next, an exemplary implementation process of transmitting a target pre-notification request in the case of multiple pre-notification queues is explained.

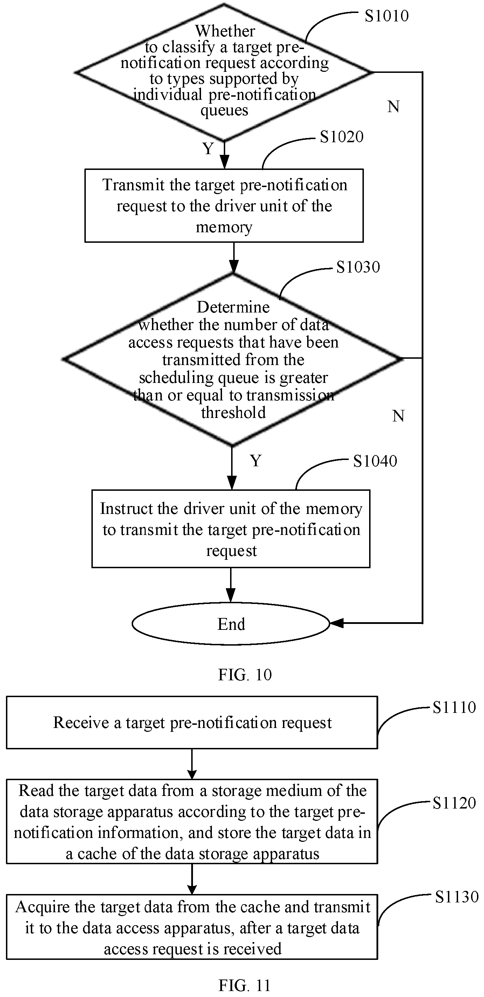

FIG. 10 is another schematic flowchart of transmitting a target pre-notification request as provided in the embodiments of the disclosure. Referring to FIG. 10, the method includes operations as follows.

At S1010, it is determined whether to classify a target pre-notification request according to the types supported by individual pre-notification queues.

If yes, at S1020, the target pre-notification request is transmitted to the driver unit of the memory.

At S830, it is determined whether the number of data access requests that have been transmitted from the scheduling queue is greater than or equal to a transmission threshold; if the number is not greater than or equal to the transmission threshold, it stops transmitting the target pre-notification request.

If the number is greater than or equal to a transmission threshold, at S840, the driver unit of the memory is instructed to transmit the target pre-notification request.

It is notable that operations S910-S930 and S1010-S1040 illustrate a transmission way of a target pre-notification request when there are multiple pre-notification queues, and the specific implementations thereof have been explained correspondingly above, which will not be repeated here.

It is notable that the contents shown in FIG. 9 and FIG. 10 illustrate the process of transmitting a target pre-notification request in the case of using multiple pre-notification queues. In this case, requests belonging to a same hardware queue may be packaged into the EHS area of the target pre-notification requests in a same pre-notification queue, and the hardware queue number is mapped into bEHSType in the EHS data header. In addition, for the target data access request, the data access apparatus may modify the group number field in the UPIU of the request to be the same as the hardware queue mapping number written into bEHSType, thereby simplifying the firmware processing logic of the data storage apparatus.

In an embodiment, the data access apparatus may update each target data access request to be transmitted to the data storage apparatus. Table 10 shows contents that may be carried in the updated target data access request, as illustrated below.

**Table 10**

| | | | | | | |
|---|---|---|---|---|---|---|
| OPERATION CODE | | | | | | |
| WRPROTECT | ... | ... | ... | | Reserved | ... |
| LOGICAL BLOCK ADDRESS | | | | | | |
| Reserved | | | | GROUP NUMBER | | |
| TRANSFER LENGTH | | | | | | |
| CONTROL | | | | | | |

Reserved in the second row and Reserved and GROUP NUMBER in the fourth row of Table 10 may be used for target identification information.

Reserved in the second row may be a reserved field of the UFS protocol for placeholder and alignment. In the embodiments of the disclosure, this field may be used to identify whether a data access request has been pre-notified, for example, it may be a binary code, 0 indicates that the target data access request has been pre-notified, and 1 indicates that the target data access request has not been pre-notified. Reserved and GROUP NUMBER in the fourth row may be combined to record an index number, which may be used to store the TAG field explained above, or other information to be recorded such as a queue number, which is not specifically limited herein. Except for Reserved and GROUP NUMBER, other contents of the target data access request remain unchanged from the original contents.

The method includes: updating the target data access request to obtain an updated target data access request, where the updated target data access request includes the target identification information; and transmitting the updated target data access request.

It is notable that, before the target data access request is transmitted, the target data access request may be updated, with a field in the target data access request modified. For example, a field corresponding to the target identification information may be modified, and then the target data access request including the target identification information may be transmitted to the data storage apparatus.

The target data access request may be updated after it is generated, and different target data access requests may be recorded based on a pre-configured field, that is, corresponding target identification information is recorded. If this way is adopted, corresponding target identification information may be added to the target identification information of the target data access request subsequently.

Alternatively, the target data access request may be updated before being transmitted to the data storage apparatus, with target identification information added to the target data access request. If this way is adopted, the added target identification information needs to be the target identification information used in the target identification information corresponding to the target data access request.

The foregoing explains operations performed on the data access apparatus side, and the data storage apparatus also perform corresponding operations after receiving the target pre-notification information. The specific implementation process of the data access method implemented by/applied to the data storage apparatus as provided in the embodiments of the disclosure is explained below.

FIG. 11 is a schematic flowchart of a data access method implemented by the data storage apparatus as provided in the embodiments of the disclosure. Referring to FIG. 11, the method includes operations as follows.

At S1110, a target pre-notification request is received.

The target pre-notification request includes target pre-notification information, the target pre-notification information is used to indicate target storage information of target data in the data storage apparatus, the target data is data to be accessed by a target data access request of a data access apparatus, and the target storage information includes at least a target storage location.

In some implementations, the execution subject of the method is the above data storage apparatus, and the data storage apparatus may receive a target pre-notification request transmitted by the data access apparatus, the target pre-notification request including target pre-notification information.

In an embodiment, the target pre-notification request includes a target UFS Protocol Information Unit (UPIU) carrying an Extra Header Segments (EHS) area, and the EHS area is used to indicate the target pre-notification information; alternatively, the target pre-notification request includes a target Small Computer System Interface (SCSI) Command (CMD), the target SCSI CMD includes a data output area, and the data output area is used to indicate the target pre-notification information.

The target pre-notification information may indicate the target storage information of target data to be accessed by the target data access request of the data access apparatus in the data storage apparatus, for example, a logical address of the target data.

The data storage apparatus may determine an actual physical address where the target data is stored according to the target storage information, and read the target data in the physical address.

At S1120, the target data is read from a storage medium of the data storage apparatus according to the target pre-notification information, and the target data is stored in a cache of the data storage apparatus.

The access speed of the cache is higher than the access speed of the storage medium.

In some implementations, after acquiring the target pre-notification information, the data storage apparatus may determine, according to the logical address, a corresponding physical address, i.e., a location in the storage medium, then read the target data from the storage medium; and after obtaining the target data, the data storage apparatus may store the target data in the cache. The cache may be in the RAM of the data storage apparatus.

It is notable that the target data may be stored in the cache of the data storage apparatus all the time before the target data access request is acquired.

At S1130, the target data is acquired from the cache and transmitted to the data access apparatus, after the target data access request is received.

The received target data access request may have been pre-notified or not, and it may be further determined whether the target data access request has been pre-notified. If the target data access request has been pre-notified, the target data may be acquired from the cache and transmitted to the data access apparatus.

It is notable that the data access apparatus may transmit an access request for target data through the driver unit of the memory, and the access request for target data is an access request for which target pre-notification information is generated in the data access apparatus.

It is notable that, each time the data storage apparatus acquires a data access request, it may determine whether the data access request is a pre-notified target data access request (a target data access request for which pre-notification has been performed). If it is a pre-notified target data access request, and the data storage apparatus has successfully completed pre-reading, the target data may be acquired from the cache and transmitted to the data access apparatus. If it is not a pre-notified target data access request, or the data storage apparatus has not completed the pre-reading, the target data may be acquired from the storage medium and transmitted to the data access apparatus.

In actual implementations, the pre-reading may not be performed due to insufficient resources of the data storage apparatus, after the pre-notification information of the target pre-notification request is received. Therefore, in addition to determining whether the target data access request is a pre-notified request, it also needs to determine whether the data storage apparatus has successfully completed the pre-reading.

In some implementations, the data storage apparatus may determine, based on the reserved field in a target data access request, whether the data access request is a pre-notified target data access request, and may determine, by looking up a pre-read table, whether the target data has been pre-read by the data storage apparatus itself, that is, whether the corresponding target data has been stored in the cache.

For example, if the reserved field identifies that the target data access request is a pre-notified target data access request, it may be determined that, before the target data access request is transmitted, the data storage apparatus has received a target pre-notification request corresponding to the target data access request.

In actual implementations, for example, it may be first determined, based on the reserved field in a target data access request, whether the target data access request is a target data access request. If it is a target data access request, the pre-read table may be further looked up according to the indication of Reserved + Group number in the fourth row, which can reduce the extra consumption of unnecessary pre-read table lookup.

In the data access method provided by the embodiments of the disclosure, the data storage apparatus receives a target pre-notification request, read target data from a storage medium of the data storage apparatus according to target pre-notification information, and store the target data in a cache of the data storage apparatus. After receiving a target data access request, the data storage apparatus acquires the target data from the cache and transmits the target data to the data access apparatus. Through the target pre-notification request, the target data may be transferred from the storage medium to the cache in advance. Since the access speed of the cache is higher than that of the storage medium, the target data can be returned to the data access apparatus more quickly after the target data access request is received, thereby improving the efficiency of returning the target data. Moreover, since the target pre-notification request is generated by the data access apparatus based on the target data access request, it has high accuracy and reduces invalid pre-notification to the data storage apparatus.

In an embodiment, the target pre-notification information includes target identification information, and the target identification information is used to indicate the target data access request.

In an embodiment, the data storage apparatus includes a first pre-read table, and the first pre-read table includes target identification information and target storage addresses. The acquiring the target data from the cache after the target data access request is received, includes: after receiving the target data access request, determining a target storage location according to the target identification information of the target data access request and the first pre-read table, and acquiring the target data from the cache based on the target storage location and a mapping relationship between the target storage location and a storage location in the cache.

The target storage address may be a logical address stored in the target storage information in the target data request instruction. In actual implementations, the first pre-read table may be first established, so that the target storage address corresponding to the target identification information can be more quickly determined based on the mapping relationship between the target identification information and the target storage address in the first pre-read table, and then the target data can be stored in a storage location in the cache after the target data is read from the target storage address.

It is notable that, in the above way, the target storage location of each target data may be determined according to the target identification information. For example, after a target pre-notification request is received, a first pre-read table is established, and data reading may be performed at a corresponding logical address after the first pre-read table is established. The first pre-read table may include relevant information such as tag numbers and logical addresses. The first pre-read table may be specifically represented as shown in Table 11, as illustrated below.

**Table 11**

| Tag number | Logical address | Read length | Other information |
|---|---|---|---|
| 0 | Address 1 | Length 1 | Information 1 |
| 1 | Address 2 | Length 2 | Information 2 |
| ... | ... | ... | ... |

The tag number may be the target identification information, for example, it may be the same as the aforementioned TAG, and may be any unique number from 0 to N. The logical address may be the target storage address obtained from the target storage information in the target pre-notification request and filled. In addition to the above two types of information, other information such as read length may also be recorded, which is not specifically limited herein.

Correspondingly, the acquiring the target data from the cache and transmitting the target data to the data access apparatus includes: after receiving the target data access request, acquiring the target data from the cache, according to the target identification information of the target data access request and the first pre-read table.

It is notable that, after receiving the target data access request, the data storage apparatus may acquire the target data from a corresponding location in the cache based on the first pre-read table, and transmit the target data to the data access apparatus.

In the data access method provided by the embodiments of the disclosure, the speed of looking up the pre-read table can be faster by setting the tag number column in the first pre-read table.

In an embodiment, the method further includes: after receiving the target data access request, determining, based on the target identification information of the target data access request, whether the target data access request is a pre-notified target data access request.

It is notable that, in addition to the TAG that records the tag number, the target identification information also has status information that records whether the target storage data corresponding to the target identification information has been pre-notified.

After receiving the target data access request, the data storage apparatus may determine, according to the status information in the target identification information of the target data access request, whether the target data access request has been pre-notified. If it is determined that the target data access request has been pre-notified, the target data may be acquired in the above way of querying the pre-read table. If it is determined that the target data access request has not been pre-notified, the target data may be read from the storage medium and transmitted to the data access apparatus.

It is notable that the above implementation process is adopted when there is the target identification information. In actual implementations, if the target identification information does not exist, the target data may also be acquired in other ways, which is specifically described as follows.

The acquiring the target data from the cache after the target data access request is received includes: after receiving the target data access request, determining whether the target data access request hits a second pre-read table, and acquiring the target data from the cache in a case where the target data access request hits the second pre-read table.

The data storage apparatus includes the second pre-read table, and the second pre-read table includes target storage location(s) and a corresponding location of the target data in the cache.

In an embodiment, the target storage location includes a target logical address, and the corresponding location of the target data in the cache may be for example a target physical address. After receiving the target pre-notification information, the method further includes: determining a target physical address corresponding to the target logical address, and establishing a second pre-read table according to the target logical address and the target physical address.

It is notable that the second pre-read table may be stored in the RAM of the data storage apparatus. After acquiring the target pre-notification information, the data storage apparatus may determine the corresponding physical address based on the target logical address in the target pre-notification information. If this physical address can be accessed normally, the target data may be read from this physical address and stored in a target physical address of the cache.

After determining the target physical address of the target data, the target logical address and target physical address of the target data may be stored in the second pre-read table. The target logical address is the above target storage address, and the target physical address is the storage location of the target data in the cache.

It is notable that, if the host performs operations affecting data content, for example, the host performs an overwriting or erasing operation on a same logical address, but the pre-notification arrives before the overwriting request and the reading is performed after the overwriting request, the reading for the target pre-notification information would be inaccurate. To avoid this situation, the physical address is added in the second pre-read table. The data storage apparatus may determine the reliability of the data by comparing the physical address obtained when reading the target pre-notification information and the physical address obtained when the target data access request arrives.

It is notable that, after the target data access request is received, it may be determined, based on the target logical address in the target data access request, whether the target logical address hits the multiple target logical addresses recorded in the second pre-read table (for example, whether the target logical address is the same as, corresponds to, or matches one of the multiple target logical addresses recorded in the second pre-read table).

If the target logical address hits the multiple target logical addresses, it may be determined that the target data exists in the cache; if the target logical address does not hit the multiple target logical addresses, it may be determined that the target data does not exist in the cache.

It is notable that there may be a case where the logical address hits the second pre-read table but the physical address is changed due to overwriting and other reasons. In this case, the target data also needs to be read from the storage medium.

In some implementations, if the target data exists in the cache, the target data may be read from the cache according to the corresponding target physical address in the second pre-read table.

In an embodiment, after determining whether the target data access request hits the second pre-read table, the method further includes: reading the target data from the storage medium and transmitting the target data to the data access apparatus, in a case where the target data access request does not hit the second pre-read table.

It is notable that, if the target data access request does not hit the second pre-read table, it may be determined that the target data corresponding to the target data access request does not exist in the cache, and the target data may be read from the storage medium and transmitted to the data access apparatus.

The overall implementation process of the data access method implemented by the data storage apparatus as provided by the embodiments of the disclosure is further explained below based on the structure of the data storage apparatus provided in FIG. 3.

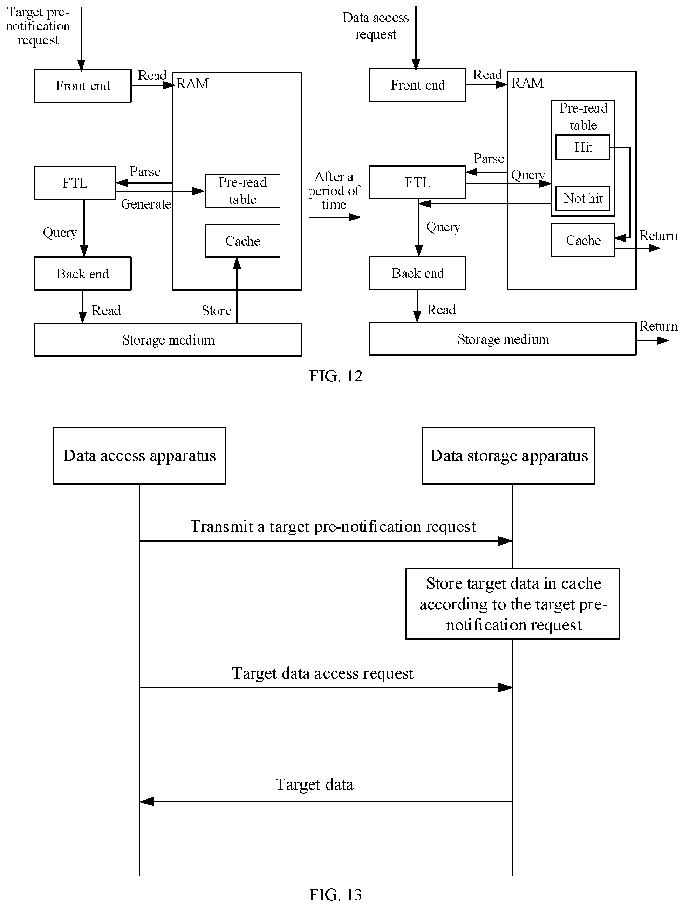

FIG. 12 is a schematic overall flowchart of returning data in the data storage apparatus as provided by the embodiments of the disclosure. Referring to FIG. 12, the process includes two parts, where the left sub-figure of FIG. 12 shows the processing performed after receiving the target pre-notification request, and the right sub-figure of FIG. 12 shows the processing performed after receiving the data access request after a period of time. The specific implementation process is as follows.

After receiving the target pre-notification request, the front end receives the target pre-notification request, and the RAM reads the target pre-notification information therein, and determines the logical address, logical unit number, read length and other information of the target pre-notification information, thereby parsing the data access request. The FTL determines, according to the logical address, a physical address of the storage medium. The target data is transferred from the storage medium to the cache in the RAM. A second pre-read table may be established based on the logical address of the target pre-notification information and a physical address of the target data in the cache. The second pre-read table is also stored in the RAM.

After receiving the data access request, the front end receives the data access request, and the RAM reads the data access request, and determines the logical address, logical unit number, read length and other information of the data access request, thereby parsing the data access request. The FTL looks up the second pre-read table stored in the RAM, and determines whether the logical address of the data access request hits the second pre-read table. If yes, the target data is read from the cache in the RAM and returned to the data access apparatus; and if no, the FTL determines a physical address according to the logical address, reads the target data from the storage medium, and returns the target data to the data access apparatus.

It is notable that the above first pre-read table and second pre-read table may be two pre-read tables with different contents. The first pre-read table is used for establishing the correspondence between the target identification information and the target logical address, and the second pre-read table is used for establishing the correspondence between the target logical address and the target physical address. They are two different pre-read tables. In actual implementations, any one of the pre-read tables may be maintained, or both the pre-read tables may be maintained, which is not specifically limited herein.

In actual implementations, if only the second pre-read table is used, after the target logical address of the target data access request is determined, a target physical address may be determined based on the second pre-read table, so as to read the target data in the target physical address. If both the first pre-read table and the second pre-read table are used, the target storage location corresponding to the target data access request may be first determined according to the target identification information and the first pre-read table, and then the target physical address corresponding to the target storage location may be determined based on the second pre-read table, so as to read the target data in the target physical address.

It is notable that the target data may be read in any one of the above two ways, which is not specifically limited herein.

One implementation process for the interaction between the data access apparatus and the data storage apparatus as provided by the embodiments of the disclosure is explained below. In this process, the data access apparatus transmits the target data access request immediately after transmitting the target pre-notification request.

FIG. 13 is a schematic diagram illustrating interaction between the data access apparatus and the data storage apparatus as provided by the embodiments of the disclosure. Referring to FIG. 13, the method includes operations as follows.

The data access apparatus transmits a target pre-notification request to the data storage apparatus, and the data storage apparatus stores target data in the cache according to the target pre-notification request. The data access apparatus transmits a target data access request to the data storage apparatus, and the data storage apparatus returns the target data from the cache to the data access apparatus according to the target data access request.

It is notable that, if the data access request transmitted by the data access apparatus to the data storage apparatus is the target data access request, the target data can be returned more quickly from the cache.

Another implementation process for the interaction between the data access apparatus and the data storage apparatus as provided by the embodiments of the disclosure is explained below. In this process, after transmitting the target pre-notification request, the data access apparatus also transmits other data access requests, and then transmits the target data access request.

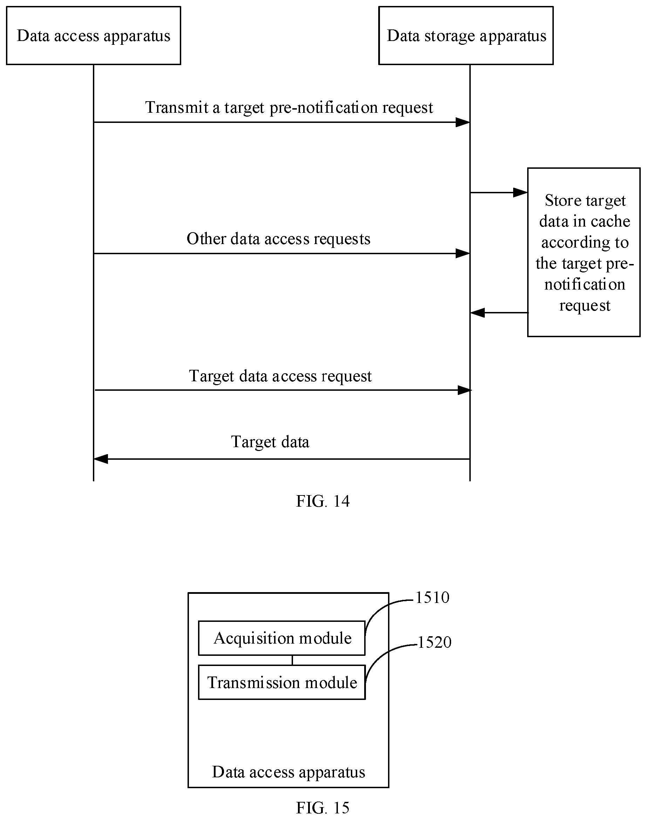

FIG. 14 is another schematic diagram illustrating interaction between the data access apparatus and the data storage apparatus as provided by the embodiments of the disclosure. Referring to FIG. 14, the method includes operations as follows.

The data access apparatus transmits a target pre-notification request to the data storage apparatus, and the data access apparatus transmits other data access requests to the data storage apparatus. The data storage apparatus stores the target data in the cache according to the target pre-notification request, during the idle period of receiving the other data access requests. After a period of time, the data access apparatus transmits the target data access request to the data storage apparatus, and the data storage apparatus returns the target data from the cache to the data access apparatus according to the target data access request.

It is notable that the data storage apparatus may select a corresponding idle time period according to the actual operation requirements, and store the target data in the cache based on the target pre-notification request during the corresponding idle time period, which can appropriately reduce the processing pressure of the data storage apparatus.

In an embodiment, since the data storage apparatus and the data access apparatus only have the function of transmitting data access requests therebetween, if the function of transmitting pre-notification requests is to be added, corresponding interaction designs are added.

Table 12 shows identifier values of the memory, and new identifier values may be added, as illustrated in Table 12 below.

**Table 12**

| Identifier | Meaning |
|---|---|
| 00h | Apparatus identifier |
| 01h | Configuration identifier |
| 03h | Unit identifier |
| 04h | Reserved identifier |
| 05h | Interconnect identifier |
| 06h | String identifier |
| 07h | Reserved identifier |
| 08h | Geometry identifier |
| 09h | Driver identifier |
| 0Ah | Device health identifier |
| 0Bh | Copy command Identifier |
| 0Ch | Pre-read mode identifier |
| ...... | |

0Ch may be an identifier indicating that the data storage apparatus may work in the pre-read mode, that is, perform the specific implementation process of returning target data through above operations S1110-S1130.

Table 13 shows whether the device supports pre-reading, and a new pre-notification descriptor may be added, as illustrated in Table 13.

**Table 13**

| Identifier | Length | Name | Value | Description |
|---|---|---|---|---|
| 00h | 1 | bLength | Specific Value | ... |

The identifier of the pre-notification descriptor is 00h, the corresponding length is 1, the corresponding name is bLength, the corresponding value is a specific value, and the corresponding description is as follows.

bit[0]: Firmware update status; bit[1]: Production status awareness; bit[2]: Device lifespan status; bit[3]: Refresh operation; bit[4]: Too high temperature; bit[5]: Too low temperature; bit[6]: Extended temperature; bit[7]: Extension specification; bit[8]: Write booster; bit[9]: Performance throttling; bit[10]: Advanced limit; bit[11~13]: Reserved information; bit[14]: Barrier information; bit[15]: Clear error history functionality; bit[16]: Exit information; bit[17]: File based optimization extension specification; bit[18]: Copy command; bit[19]: Pre-read function; bit[20~31]: Reserved information.

It may be determined, based on bit[19]: Pre-read function, whether the memory supports pre-reading, for example, 1 means it supports pre-reading, 0 means that it does not support pre-reading.

It is notable that the pre-reading function means that the data storage apparatus can perform parsing and read a corresponding result, based on the received target pre-notification information.

Table 14 shows more detailed descriptors of the device, as illustrated below.

**Table 14**

| Identifier | Length | Name | Value | Description |
|---|---|---|---|---|
| 00h | 1 | bLength | 07h | Size of the descriptor |
| 01h | 1 | DescriptorIDN | 0Ch | Pre-read mode descriptor |
| 03h | 2 | wVersion | 0100h | Pre-read version |
| 04h | 1 | bPreReadType | Specific Value | Mode of transmitting |
| 05h | 1 | bMaxTag | Specific Value | Maximum tag number device supported |
| 06h | 1 | bMaxEHSLength | Specific Value | Maximum EHS length device supported |

For the descriptor with identifier 00h, the length is 1, the name is bLength, the value is 07h, and the corresponding description is that it indicates the size of the descriptor. For the descriptor with identifier 01h, the length is 1, the name is DescriptorIDN, the value is 0Ch, and the corresponding description is pre-read mode descriptor. For the descriptor with identifier 03h, the length is 2, the name is wVersion, the value is 0100h, and the corresponding description is pre-read version. For the descriptor with identifier 04h, the length is 1, the name is bPreReadType, the value is a specific value, and the corresponding description is mode of transmitting. For the descriptor with identifier 05h, the length is 1, the name is bMaxTag, the value is a specific value, and the corresponding description is the maximum tag number device supported. For the descriptor with identifier 06h, the length is 1, the name is bMaxEHSLength, the value is a specific value, and the corresponding description is the maximum EHS length device supported.

It is notable that, after the descriptors, identifier values and the like are defined in the above way, the data access apparatus and the data storage apparatus may realize the transmission of the target pre-notification requests.

It should be understood that, although the operations in the above flowcharts are shown in sequence as indicated by the arrows, these operations are not necessarily executed in the sequence indicated by the arrows. Unless explicitly stated herein, the execution order of these operations is not strictly limited, and these operations may be executed in other orders. Moreover, at least part of the operations in the above flowcharts may include multiple sub-operations or multiple stages. These sub-operations or stages are not necessarily executed and completed at the same time, but may be executed at different times. These sub-operations or stages are not necessarily executed in sequence, but may be performed in turn or alternately with at least part of other operations or sub-operations or stages of other operations.

Based on the foregoing embodiments, the embodiments of the disclosure provide a data access apparatus and a data storage apparatus. The modules included in the apparatuses and the units included in each module may be implemented by a processor; of course, they may also be implemented by a specific logic circuit. During implementations, the processor may be a Central Processing Unit (CPU), a Microcontroller Unit (MCU), a Digital Signal Processor (DSP), a Field Programmable Gate Array (FPGA), or the like.

FIG. 15 is a schematic structural diagram of the data access apparatus as provided by the embodiments of the disclosure. Referring to FIG. 15, the data access apparatus includes an acquisition module 1510 and a transmission module 1520.

The acquisition module 1510 is configured to acquire target pre-notification information, the target pre-notification information is used to indicate target storage information of target data to be accessed by a target data access request in a data storage apparatus, and the target storage information includes at least a target storage location.

The transmission module 1520 is configured to transmit the target pre-notification information.

In an embodiment, the acquisition module 1510 is specifically configured to acquire the target pre-notification information when a preset condition is satisfied. The preset condition includes at least one of the following conditions: the number of data access requests included in a scheduling queue is greater than or equal to a waiting threshold; and the number of random data access requests transmitted by the data access apparatus is greater than or equal to an access threshold, and an offset between a storage location of data accessed by each of the random data access requests in the data storage apparatus and a storage location of data accessed by a previous transmitted data access request in the data storage apparatus is greater than or equal to an offset threshold.

In an embodiment, the transmission module 1520 is specifically configured to transmit the target pre-notification information when the number of data access requests that have been transmitted is greater than or equal to a transmission threshold.

In an embodiment, in the apparatus, the target pre-notification information further includes target identification information, and the target identification information is used to indicate the target data access request.

In an embodiment, the transmission module 1520 is specifically configured to: generate a target pre-notification request according to the target pre-notification information, and store the target pre-notification request in a pre-notification queue, the target pre-notification request including the target pre-notification information; and acquire the target pre-notification request from the pre-notification queue and transmit the target pre-notification request.

In an embodiment, the transmission module 1520 is specifically configured to generate a target UFS Protocol Information Unit (UPIU) carrying an Extra Header Segments (EHS) area according to the target pre-notification information, the EHS area is used to indicate the target pre-notification information, and the target UPIU is the target pre-notification request.

In an embodiment, in the apparatus, the EHS area includes an EHS data header and an EHS data area. The EHS data header includes a pre-notification quantity field and a pre-notification content field. The pre-notification quantity field is used to indicate the quantity of the target pre-notification information. The pre-notification content field is used to indicate an information type of the target storage information, and the information type includes at least a storage location type. The EHS data area includes the target storage information.

In an embodiment, in the apparatus, the EHS data area includes a first identification field, and the first identification field is used to indicate the target identification information.

In an embodiment, there are at least two pre-notification queues, each pre-notification queue is used to store pre-notification requests, the EHS data header further includes a pre-notification type field, and the pre-notification type field is used to indicate which one of the at least two pre-notification queues the target pre-notification request is to be stored in. The transmission module 1520 is specifically configured to store the target pre-notification request in a pre-notification queue indicated by the pre-notification type field.

In an embodiment, in the apparatus, the EHS data header further includes a length field, the UPIU includes a total EHS length field, and a value of the total EHS length field included in the UPIU is the same as a value of the length field in the EHS data header.

In an embodiment, the transmission module 1520 is further configured to generate a UTP Transfer Request Descriptor (UTRD) according to the target pre-notification information, the UTRD includes a total EHS length field, and a value of the total EHS length field included in the UTRD is the same as a value of the length field in the EHS data header.

In an embodiment, the data storage apparatus is a Universal Flash Storage (UFS), and the transmission module 1520 is specifically configured to generate a target Small Computer System Interface (SCSI) Command (CMD) according to the target pre-notification information, the target SCSI CMD includes a data output area, and the data output area is used to indicate the target pre-notification information.

In an embodiment, in the apparatus, the data output area includes a second identification field, and the second identification field is used for the target identification information.

In an embodiment, in the apparatus, the transmission priority of the SCSI CMD is higher than the transmission priority of the data access request.

In an embodiment, the transmission module 1520 is further configured to update the target data access request to obtain an updated target data access request, the updated target data access request including the target identification information; and transmit the updated target data access request.

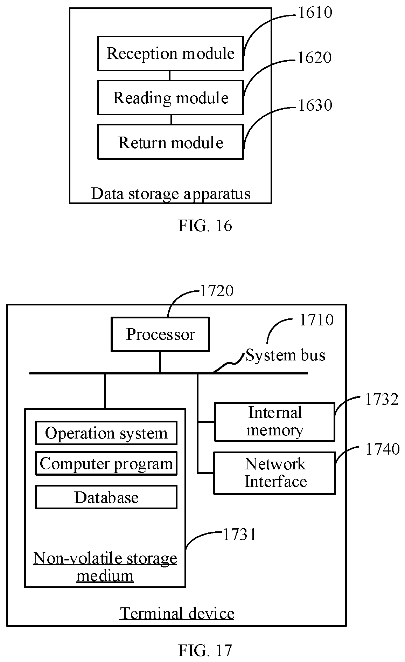

FIG. 16 is a schematic structural diagram of the data storage apparatus as provided by the embodiments of the disclosure. Referring to FIG. 16, the data storage apparatus includes a reception module 1610, a reading module 1620, and a return module 1630.

The reception module 1610 is configured to receive a target pre-notification request, the target pre-notification request includes target pre-notification information, the target pre-notification information is used to indicate target storage information of target data to be accessed by a target data access request of a data access apparatus in the data storage apparatus, and the target storage information includes at least a target storage location.

The reading module 1620 is configured to read the target data from a storage medium of the data storage apparatus according to the pre-notification information, and store the target data in a cache of the data storage apparatus, an access speed of the cache being higher than an access speed of the storage medium.

The return module 1630 is configured to acquire the target data from the cache and transmit the target data to the data access apparatus, after the target data access request is received.

In an embodiment, in the apparatus, the target pre-notification request includes a target UFS Protocol Information Unit (UPIU) carrying an Extra Header Segments (EHS) area, the EHS area is used to indicate the target pre-notification information; alternatively, the target pre-notification request includes a target Small Computer System Interface (SCSI) Command (CMD), the target SCSI CMD includes a data output area, and the data output area is used to indicate the target pre-notification information.

In an embodiment, in the apparatus, the target pre-notification information includes target identification information, and the target identification information is used to indicate the target data access request.

In an embodiment, the return module 1630 is specifically configured to: after the target data access request is received, determine a target storage location of the target data, according to the target identification information of the target data access request and a first pre-read table; and acquire the target data from the cache, based on the target storage location and a mapping relationship between the target storage location and a storage location in the cache. The first pre-read table includes the target identification information and the target storage location.

In an embodiment, the reading module 1620 is further configured to determine whether the target data access request hits a second pre-read table after the target data access request is received; and acquire the target data from the cache when the target data access request hits the second pre-read table. The second pre-read table includes the target storage location and a storage location of the target data in the cache.

In an embodiment, the return module 1630 is further configured to read the target data from the storage medium and transmit the target data to the data access apparatus, when the target data access request does not hit the second pre-read table.

The description of the above apparatus embodiments is similar to that of the above method embodiments, and has the same beneficial effects as the method embodiments. For technical details not disclosed in the apparatus embodiments of the disclosure, reference may be made to the description of the method embodiments of the disclosure.

It is notable that the division of the modules of the data access apparatus shown in FIG. 15 and the data storage apparatus shown in FIG. 16 in the embodiments of the disclosure is schematic, and is only a logical function division. In actual implementations, they may be divided in other ways. In addition, the individual functional units in each embodiment of the disclosure may be integrated into one processing unit, or each unit may exist alone physically, or two or more units may be integrated into one unit. The above integrated unit may be implemented in the form of hardware, or software functional units, or a combination of software and hardware.

It is notable that, in the embodiments of the disclosure, if the above methods are implemented in the form of software functional modules and sold or used as an independent product, it may also be stored in a computer-readable storage medium. Based on this understanding, the substantial technical solutions of the embodiments of the disclosure or a part thereof contributing to the related art may be embodied in the form of a software product. The computer software product is stored in a storage medium and includes several instructions for enabling an electronic device to execute all or part of the method described in each embodiment of the disclosure. The storage medium includes U disk, mobile hard disk, Read Only Memory (ROM), magnetic disk, optical disk and other media that can store program codes. Thus, the embodiments of the disclosure are not limited to any specific combination of hardware and software.

FIG. 17 is a schematic structural diagram of a terminal device as provided by the embodiments of the disclosure. Referring to FIG. 17, the embodiments of the disclosure provide a terminal device, which may be a device composed of the data access apparatus and the data storage apparatus, and the internal structure thereof is schematically illustrated in FIG. 17. The terminal device includes a processor 1720, a memory and a network interface 1740 that are connected through a system bus 1710. The processor 1720 of the terminal device is used to provide computing and control capabilities. The memory of the terminal device includes a non-volatile storage medium 1731 and an internal memory 1732. The non-volatile storage medium 1731 stores an operating system(s), computer programs and a database(s). The internal memory 1732 provides an environment for the operation of the operating system(s) and computer programs in the non-volatile storage medium 1731. The database(s) of the terminal device is used to store data. The network interface 1740 of the terminal device is used to communicate with an external terminal through a network connection. The computer program(s) is executable by the processor to implement the above method(s).

The embodiments of the disclosure provide a computer-readable storage medium having a computer program stored thereon, and the computer program, when being executed by a processor, causes the operations in the method(s) provided in the above embodiments to be implemented.

The embodiments of the disclosure provide a computer program product including instructions which, when running on a computer, cause the computer to perform the operations in the method(s) provided by the above method embodiments.

Those skilled in the art can understand that the structure shown in FIG. 17 is only a part of the structure related to the solution of the disclosure, and does not constitute a limitation on the terminal device to which the solution of the disclosure is applied. A specific terminal device may include more or fewer components than those shown in the figure, or combine some components, or have a different component arrangement.

In an embodiment, the data access apparatus and the data storage apparatus provided by the disclosure each may be implemented in the form of a computer program. The computer program may run on the terminal device as shown in FIG. 17. Various program modules constituting the above apparatuses may be stored in the memory of the terminal device. The computer program constituted by the program modules causes the processor to execute the operations in the method(s) described in the various embodiments of the disclosure in this specification.

It is notable herein that the descriptions of the above storage medium and device embodiments are similar to the descriptions of the above method embodiments, and have similar beneficial effects to the method embodiments. For technical details not disclosed in the storage medium and device embodiments of the disclosure, reference may be made to the descriptions of the method embodiments of the disclosure.

It should be understood that references throughout this specification to "one embodiment" or "an embodiment" or "some embodiments" mean that a particular feature, structure, or characteristic described in connection with the embodiment(s) is included in at least one embodiment of the disclosure. Thus, the phrase "in one embodiment" or "in an embodiment" or "in some embodiments" appearing in various places throughout this specification does not necessarily refer to a same embodiment. Furthermore, the particular features, structures, or characteristics may be combined in any suitable manner in one or more embodiments. It should be understood that the sequence numbers of the above processes in the embodiments of the disclosure do not mean the order of execution, and the order of execution of the processes should be determined by their functions and internal logic, and should not constitute any limitation on the implementation process of the embodiments of the disclosure. The serial numbers of the embodiments of the disclosure are merely for description, and do not represent the advantages or disadvantages of the embodiments. The above descriptions of the various embodiments tend to emphasize the differences between the various embodiments, and the same or similar parts may be referred to each other. For brevity, no further details are provided herein.

The term "and/or" herein merely represents an association relationship of associated objects, indicating that three relationships may exist. For example, object A and/or object B may indicate that there are three cases: object A exists alone, object A and object B exist simultaneously, and object B exists alone.

It is notable that, in this specification, the terms "comprise", "include" or any other variations thereof are intended to cover a non-exclusive inclusion, such that a process, method, article or apparatus including a series of elements does not include only those elements listed, but may include other elements not expressly listed or other elements inherent to such process, method, article or apparatus. Without further limitation, an element defined by the phrase "comprising/including a... " does not exclude the presence of other identical elements in the process, method, article or apparatus including the element.

In the several embodiments provided by the disclosure, it should be understood that the disclosed devices and methods may be implemented in other ways. The above-described embodiments are merely illustrative. For example, the division of the modules is merely a logical function division, and there may be another division manner in actual implementations. For example, multiple modules or components may be combined or integrated into another system, or some features may be omitted or not executed. In addition, the shown or discussed mutual coupling or direct coupling or communication connection may be implemented through some interfaces, or indirect coupling or communication connection of devices or modules, and may be electrical, mechanical or in other forms.

The modules described as separate parts may or may not be physically separate, and the parts shown as modules may or may not be physical modules; they may be located in one place, or may be distributed over multiple network units. Some or all of the modules may be selected according to actual needs to achieve the purpose of the solutions of the embodiments.

In addition, the individual functional modules in each embodiment of the disclosure may be integrated into one processing unit, or each module may exist alone physically, or two or more modules may be integrated into one unit. The above integrated unit may be implemented in the form of hardware or a software functional unit.

Those of ordinary skill in the art can understand that all or part of the operations of the above method embodiments may be implemented by instructing relevant hardware through a program. The program may be stored in a computer-readable storage medium. The program, when being executed, causes operations of the above method embodiments to be implemented. The storage medium includes various media that can store program codes, such as a removable storage device, ROM, magnetic disk or optical disk.

Alternatively, if the above integrated unit of the disclosure is implemented in the form of a software functional unit and sold or used as an independent product, it may be stored in a computer-readable storage medium. Based on such understanding, the substantial technical solutions of the embodiments of the disclosure or the part thereof contributing to the related art may be embodied in the form of a software product. The computer software product is stored in a storage medium and includes several instructions for enabling an electronic device to execute all or part of the method described in each embodiment of the disclosure. The storage medium includes various media that can store program codes, such as a removable storage device, ROM, magnetic disk or optical disk.

The methods disclosed in the several method embodiments provided by the disclosure may be combined arbitrarily without conflict, to obtain a new method embodiment.

The features disclosed in the several product embodiments provided by the disclosure may be combined arbitrarily without conflict, to obtain a new product embodiment.

The features disclosed in the several method or device embodiments provided by the disclosure may be combined arbitrarily without conflict, to obtain a new method embodiment or device embodiment.

The foregoing only illustrates the embodiments of the disclosure, and the scope of protection of the disclosure is not limited thereto. Any person skilled in the art can easily conceive of variations or substitutions within the technical scope disclosed by the disclosure, and all such variations and substitutions shall fall within the scope of protection of the disclosure. Therefore, the scope of protection of the disclosure shall be subject to the scope of protection of the claims.

## Claims

1. A data access method, implemented by a data access apparatus, the method comprising:
acquiring target pre-notification information, wherein the target pre-notification information is used to indicate target storage information of target data to be accessed by a target data access request in a data storage apparatus, and the target storage information comprises at least a target storage location; and
transmitting the target pre-notification information.

2. The method as claimed in claim 1, wherein the acquiring the target pre-notification information comprises:
acquiring the target pre-notification information in a case where a preset condition is satisfied, wherein the preset condition comprises at least one of following conditions:
the number of data access requests comprised in a scheduling queue is greater than or equal to a waiting threshold; and
the number of random data access requests transmitted by the data access apparatus is greater than or equal to an access threshold, and an offset between a storage location of data accessed by each of the random data access requests in the data storage apparatus and a storage location of data accessed by a previous transmitted data access request in the data storage apparatus is greater than or equal to an offset threshold.

3. The method as claimed in claim 1, wherein the transmitting the target pre-notification information comprises:
transmitting the target pre-notification information, in a case where the number of data access requests that have been transmitted is greater than or equal to a transmission threshold.

4. The method as claimed in claim 1, wherein the target pre-notification information further comprises target identification information, and the target identification information is used to indicate the target data access request.

5. The method as claimed in claim 4, wherein the data access apparatus comprises a pre-notification queue, and after the target pre-notification information is acquired, the method further comprises:
generating a target pre-notification request according to the target pre-notification information, and storing the target pre-notification request in the pre-notification queue, wherein the target pre-notification request comprises the target pre-notification information; and
the transmitting the target pre-notification information comprises:
acquiring the target pre-notification request from the pre-notification queue, and transmitting the target pre-notification request.

6. The method as claimed in claim 5, wherein the data storage apparatus is universal flash storage (UFS), and the generating the target pre-notification request according to the target pre-notification information comprises:
generating, according to the target pre-notification information, a target UFS protocol information unit (UPIU) carrying an extra header segments (EHS) area, wherein the EHS area is used to indicate the target pre-notification information, and the target UPIU is the target pre-notification request.

7. The method as claimed in claim 6, wherein the EHS area comprises an EHS data header and an EHS data area, the EHS data header comprises a pre-notification quantity field and a pre-notification content field; the pre-notification quantity field is used to indicate the quantity of the target pre-notification information, the pre-notification content field is used to indicate an information type of the target storage information, and the information type comprises at least a storage location type; and the EHS data area comprises the target storage information.

8. The method as claimed in claim 7, wherein the EHS data area comprises a first identification field, and the first identification field is used to indicate the target identification information.

9. The method as claimed in claim 8, wherein there are at least two pre-notification queues, each of the pre-notification queues is used to store pre-notification requests, the EHS data header further comprises a pre-notification type field, the pre-notification type field is used to indicate which one of the at least two pre-notification queues the target pre-notification request is to be stored in, and the storing the target pre-notification request in the pre-notification queue comprises:
storing the target pre-notification request in a pre-notification queue indicated by the pre-notification type field.

10. The method as claimed in claim 8, wherein the EHS data header further comprises a length field, the UPIU comprises a total EHS length field, and a value of the total EHS length field comprised in the UPIU is the same as a value of the length field of the EHS data header.

11. The method as claimed in claim 8, wherein before the target pre-notification information is transmitted, the method further comprises:
generating a UTP transfer request descriptor (UTRD) according to the target pre-notification information, wherein the UTRD comprises a total EHS length field, and a value of the total EHS length field comprised in the UTRD is the same as a value of a length field of the EHS data header.

12. The method as claimed in claim 5, wherein the data storage apparatus is a universal flash storage (UFS), and the generating the target pre-notification request according to the target pre-notification information comprises:
generating a target small computer system interface (SCSI) command (CMD) according to the target pre-notification information, wherein the target SCSI CMD comprises a data output area, and the data output area is used to indicate the target pre-notification information.

13. The method as claimed in claim 12, wherein the data output area comprises a second identification field, and the second identification field is used for the target identification information.

14. The method as claimed in claim 12, wherein a transmission priority of the SCSI CMD is higher than a transmission priority of the data access request.

15. The method as claimed in claim 4, wherein the method further comprises:
updating the target data access request and obtaining an updated target data access request, wherein the updated target data access request comprises the target identification information; and
transmitting the updated target data access request.

16. A data access method, implemented by a data storage apparatus, the method comprising:
receiving a target pre-notification request, wherein the target pre-notification request comprises target pre-notification information, and the target pre-notification information is used to indicate target storage information of target data in the data storage apparatus, the target data being data to be accessed by a target data access request of a data access apparatus, and the target storage information comprising at least a target storage location;
reading the target data from a storage medium of the data storage apparatus according to the target pre-notification information, and storing the target data in a cache of the data storage apparatus, wherein an access speed of the cache is higher than an access speed of the storage medium; and
after receiving the target data access request, acquiring the target data from the cache and transmitting the target data to the data access apparatus.

17. The method as claimed in claim 16, wherein the target pre-notification request comprises a target UFS protocol information unit (UPIU) carrying an extra header segments (EHS) area, and the EHS area is used to indicate the target pre-notification information; or
the target pre-notification request comprises a target small computer system interface (SCSI) command (CMD), the target SCSI CMD comprises a data output area, and the data output area is used to indicate the target pre-notification information.

18. The method as claimed in claim 17, wherein the target pre-notification information further comprises target identification information, and the target identification information is used to indicate the target data access request.

19. The method as claimed in claim 18, wherein the target data access request comprises the target identification information, the data storage apparatus comprises a first pre-read table, the first pre-read table comprises the target identification information and the target storage location; and the acquiring the target data from the cache after receiving the target data access request comprises:
after receiving the target data access request, determining the target storage location, according to the target identification information of the target data access request and the first pre-read table; and
acquiring the target data from the cache, based on the target storage location and a mapping relationship between the target storage location and a storage location in the cache.

20. The method as claimed in claim 16, wherein the data storage apparatus comprises a second pre-read table, the second pre-read table comprises the target storage location and a storage location of the target data in the cache, and the acquiring the target data from the cache after receiving the target data access request comprises:
after receiving the target data access request, determining whether the target data access request hits the second pre-read table; and
acquiring the target data from the cache, in a case where it is determined that the target data access request hits the second pre-read table.

21. The method as claimed in claim 20, wherein after determining whether the target data access request hits the second pre-read table, the method further comprises:
reading the target data from the storage medium and transmitting the target data to the data access apparatus, in a case where it is determined that the target data access request does not hit the second pre-read table.

22. A data access apparatus, comprising:
an acquisition module, configured to acquire target pre-notification information, wherein the target pre-notification information is used to indicate target storage information of target data to be accessed by a target data access request in a data storage apparatus, and the target storage information comprises at least a target storage location; and
a transmission module, configured to transmit the target pre-notification information.

23. A data storage apparatus, comprising:
a reception module, configured to receive a target pre-notification request, wherein the target pre-notification request comprises target pre-notification information, and the target pre-notification information is used to indicate target storage information of target data in the data storage apparatus, the target data being data to be accessed by a target data access request of a data access apparatus, and the target storage information comprising at least a target storage location;
a reading module, configured to read the target data from a storage medium of the data storage apparatus according to the pre-notification information, and store the target data in a cache of the data storage apparatus, wherein an access speed of the cache is higher than an access speed of the storage medium; and
a return module, configured to acquire the target data from the cache and transmit the target data to the data access apparatus, after the target data access request is received.

24. A terminal device, comprising a memory and a processor, wherein the memory stores a computer program executable on the processor, and the processor is configured to execute the program to implement operations of the method as claimed in any one of claims 1 to 15 or 16 to 21.

25. A computer-readable storage medium having a computer program stored thereon, wherein the computer program, when being executed by a processor, causes the method as claimed in any one of claims 1 to 21 to be implemented.
